(19) Europäisches Patentamt
European Patent Office
Office européen des brevets

(11) **EP 1 852 155 B1**

(12) **EUROPÄISCHE PATENTSCHRIFT**

(45) Veröffentlichungstag und Bekanntmachung des Hinweises auf die Patenterteilung:
**11.01.2012   Patentblatt 2012/02**

(51) Int Cl.:
***A63B 71/06*** *(2006.01)*

(21) Anmeldenummer: **06020009.4**

(22) Anmeldetag: **25.09.2006**

(54) **System und Verfahren zur Positionsbestimmung eines beweglichen Objekts mittels Magnetfeldern**

System and method for determining the position of a movable object by means of magnetic fields

Système et procédé pour déterminer la position d'un objet mobile à l'aide de champs magnétiques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.05.2006   EP 06009069**

(43) Veröffentlichungstag der Anmeldung:
**07.11.2007   Patentblatt 2007/45**

(73) Patentinhaber: **Cairos Technologies AG**
**76307 Karlsbad (DE)**

(72) Erfinder: **Englert, Walter**
**88483 Burgrieden (DE)**

(74) Vertreter: **Grünecker, Kinkeldey,**
**Stockmair & Schwanhäusser**
**Anwaltssozietät**
**Leopoldstrasse 4**
**80802 München (DE)**

(56) Entgegenhaltungen:
**WO-A-00/47291          DE-A1- 2 732 543**
**US-A1- 2003 163 037     US-B1- 6 686 881**

**Beschreibung**

Die vorliegende Erfindung bezieht sich auf ein Konzept zur Positionsbestimmung eines beweglichen Objekts mittels Magnetfeldern, wie es beispielsweise beim Fußball zur Torentscheidung durch Ballortung eingesetzt werden kann.

Eine Vielzahl von Aufgaben, wie beispielsweise eine Ballortung bei einem Fußballspiel, setzt eine Kenntnis von Position und/oder Orientierung von Objekten voraus. Beim Fußballspiel ist eines der umstrittensten Themen, ob in kritischen Situationen der Ball die Torlinie überschritten hat oder nicht. Hierzu ist es notwendig, dass die Position des Balls an der Torlinie mit einer Genauigkeit von ca. +/-1,5 cm gemessen werden kann. Außerdem dürfen Einflüsse von Personen, die sich nahe des Balls bewegen bzw. den Ball abdecken, keine Rolle spielen.

Es existieren zahlreiche Lokalisationsverfahren, die beispielsweise auf optischen 2-D- oder 3-D-Sensoren mit einem Auswertesystem, einer Ausnutzung des bekannten Radarprinzips oder eines Prinzips der Funklokalisierung basieren.

Ein Prinzip der Funklokalisierung ist die Lokalisierung von Objekten durch elektromagnetische Wellenausbreitung. Dabei wird ein Empfänger in ein zu lokalisierendes Objekt integriert bzw. an einem zu lokalisierenden Objekt angebracht, der bei Anfrage Daten an eine zentrale Sende/Empfangsvorrichtung schickt. Eine Position des Objekts kann danach aus Signallaufzeiten bzw. aus Differenzen zwischen wenigstens zwei an unterschiedlichen Antennen empfangenen Signalen berechnet werden.

Funklokalisierung von Objekten kann beispielsweise mittels der sog. RFID-Technologie (RFID = Radio Frequency Identification) durchgeführt werden. Für ortsauflösende Verfahren, bei denen eine relativ exakte Position eines RFID-Transponders im Raum ermittelt werden soll, werden zumeist batteriebetriebene, d.h. aktive RFID-Transponder verwendet. Ein Nachteil der Funklokalisierung besteht beispielsweise in einer Abschattung und/oder in einer Reflexion elektromagnetischer Wellen durch bestimmte Hindernisse. Dadurch erreichen Systeme basierend auf einer Funklokalisierung beispielsweise nicht die für eine Torentscheidung beim Fußball benötigte Genauigkeit.

Wie bereits beschrieben, basieren derzeitige Lokalisationsverfahren beispielsweise auf optischen 2-D- oder 3-D-Sensoren mit einem Auswertesystem, oder sie basieren auf dem Einsatz von batteriebetriebenen, d.h. aktiven RFID-Transpondern. Solche Lokalisationsverfahren ziehen hohe Investitions- und Wartungskosten, Empfindlichkeit gegenüber Umweltbedingungen und einen großen Aufwand zur Anpassung der Auswertealgorithmen nach sich. Für eine Nahbereichslokalisierung, d.h. einer Positionsbestimmung von Objekten innerhalb eines kleinen Bereichs, sind Systeme, die eine Funklokalisierung nutzen, nicht geeignet, da bei einer geringen geometrischen Ausdehnung Unterschiede von verschiedenen Signallaufzeiten kaum noch messbar sind. Die Anforderungen an Systeme zur Lokalisation von Objekten werden also von diesen Verfahren in Bezug auf die Wirtschaftlichkeit, Robustheit, Taktzeit und Objektunabhängigkeit für eine exakte Positionsbestimmung, beispielsweise in einem Bereich von wenigen Zentimetern, nicht bzw. nur unzureichend erfüllt.

US-B1-6 686 881, 3. Februar 2004, bezieht sich auf ein System und Verfahren zur kabellosen Identifikation und Verfolgung eines Objektes mittels Magnetfeldern. Darin wird das von einer oder mehreren Basisstationen ausgesandte Magnetfeld detektiert und in Form von Magnetfeldmesswerten an die Basisstationen übermittelt, wodurch die Entfernung zwischen Objekt und dem oder der Basisstationen ermittelt werden kann.

US2003/163037 A1, 28. August 2001, bezieht sich auf ein Verfahren und eine Vorrichtung zur Bestimmung der Position eines Sensors mittels Magnetfeldern, welche vom Sensor gemessen werden.

DE 27 32 543 A1, 1. Februar 1979, bezieht sich auf eine Vorrichtung und ein Verfahren zur Überwachung einer Grenzlinie. Dabei werden entlang einer Grenzlinie wenigstens zwei elektromagnetische Wellen ausstrahlende Sendeeinrichtungen vorgesehen, die ein Magnetfeld erzeugen, welches durch eine entlang der Grenzlinie vorgesehene Empfangseinrichtung empfangen werden kann. Da die Polarität der elektromagnetischen Wellen in Bezug auf die Empfangseinrichtung gegensinnig ist, wird nur dann von der Empfangseinrichtung ein Magnetfeld detektiert, wenn ein Objekt mit einer Einrichtung zur Beeinflussung der elektromagnetischen Felder die erzeugten Magnetfelder stört.

Die Aufgabe der vorliegenden Erfindung besteht somit darin, eine Vorrichtung, ein System und ein Verfahren zur verbesserten Lokalisierung von beweglichen Objekten vorzusehen.

Diese Aufgabe wird durch die Gegenstände der unabhängigen Ansprüche gelöst.

Bevorzugte Ausführungsformen der Erfindung werden durch die abhängigen Ansprüche definiert.

Die Erkenntnis der vorliegenden Erfindung besteht darin, dass eine Position, Richtung und/oder Bewegung eines beweglichen Objekts bestimmt werden kann, indem eine Stärke und/oder Orientierung eines statischen Magnetfelds am Ort des Objekts gemessen wird. Ein System zur Positionsbestimmung eines beweglichen Objekts gemäß einem Ausführungsbeispiel der vorliegenden Erfindung umfasst im Wesentlichen stationär angebrachte Magnetfeldgeneratoren und einem freibeweglichen Magnetfeldsensor. Ein Magnetfeldgenerator erzeugt ein statisches oder ein wechselndes Magnetfeld. Dessen Intensität und Richtung ist charakteristisch für einen Raumpunkt. Dieses Feld wird vom Magnetfeldsensor gemessen und die Messung lässt sich als Lage und Orientierung des Sensors relativ zur Magnetfeldgeneratorposition interpretieren. Dazu werden die Magnetfeldsensorsignale an einen Rechner übertragen, der sie beispielsweise mittels einer bekannten Kalibrierung mit dem Raumpunkt identifiziert. Über die gemessene Intensität und Richtung des Magnetfeldgenerator-Magnetfeldes kann also indirekt die relative Position des Magnetfeldsensors, d.h. des beweglichen Objektes gemessen werden. Der Magnetfeldgenerator ist so ausgelegt, dass ein Feld auch in großem Relativabstand nachmessbar ist.

Dazu wird zunächst gemäß einem Ausführungsbeispiel der vorliegenden Erfindung in einem ersten Schritt am Ort des beweglichen Objekts Stärke und Richtung des Erdmagnetfelds relativ zu dem beweglichen Objekt mittels eines 3-dimensionalen Magnetfeldsensors gemessen. Anschließend wird in einem zweiten Schritt mittels einer ersten Spule ein statisches Magnetfeld erzeugt. Erfindungsgemäß wird nun am Ort des beweglichen Objekts Stärke und Richtung der Kombination des von der ersten Spule erzeugten statischen Magnetfeldes mit dem Erdmagnetfeld gemessen. Die Messung wird dabei in einem Zeitraum durchgeführt, in der das von der ersten Spule erzeugte Magnetfeld konstant bzw. statisch ist. In einem dritten Schritt wird nun beispielsweise der Strom in der ersten Spule umgepolt und darauffolgend die Kombination des von der ersten Spule erzeugten statischen Magnetfeldes mit dem Erdmagnetfeld am Ort des Objekts erneut gemessen. Eine Kombination der Messungen des zweiten und dritten Schrittes ermöglicht es, einen Effekt des Erdmagnetfelds herauszurechnen und somit eine Intensität und Richtung des von der ersten Spule erzeugten Magnetfeldes zu bestimmen. Diese Intensität und Richtung ist charakteristisch für einen Raumpunkt in Reichweite des von der ersten Spule erzeugten Magnetfeldes, d.h. in einem Ortsbestimmungsbereich. Den Messwerten sind daher Position und Orientierung des beweglichen Objekts relativ zur Spulenposition zuordenbar.

Die oben beschriebenen Messungen können nun erfindungsgemäß für wenigstens zwei Spulen, die an verschiedenen Positionen bezüglich des Ortsbestimmungsbereichs angeordnet sind, durchgeführt werden, um eine Position des beweglichen Objektes, das sich in Reichweite der durch die Spulen erzeugten statischen Magnetfelder befindet, ermitteln zu können, nachdem die Messdaten von dem beweglichen Objekt an eine zentrale Auswertevorrichtung übermittelt worden sind.

Die zentrale Auswertevorrichtung kann eine momentane Position, eine Rotation und eine Geschwindigkeit des beweglichen Objekts bestimmen.

Die Zuordnung der von dem beweglichen Objekt übermittelten Messwerte zu der Position des beweglichen Objekts wird nun bei einem ersten Aspekt der vorliegenden Erfindung dadurch erreicht, dass in der zentralen Auswertevorrichtung ein Gleichungssystem zur Bestimmung der Position des beweglichen Objekts gelöst wird, in das die Messwerte eingesetzt werden.

Ein Vorteil dieses Aspekts der vorliegenden Erfindung besteht darin, dass vorab beispielsweise keine Kalibrierung des Systems zur Lokalisierung des beweglichen Objekts vorgenommen werden muss.

Bei einem weiteren Aspekt der vorliegenden Erfindung erfolgt die Bestimmung der Position des beweglichen Objekts dadurch, dass die an dem Ort des beweglichen Objekts gemessenen Feldstärken und -orientierungen in der zentralen Auswertevorrichtung mit vorab bestimmten Feldstärken und Feldrichtungen im Lokalisationsbereich bzw. Ortsbestimmungsbereich verglichen werden. Ein Datensatz, der die beste Korrelation bzw. Übereinstimmung erzielt, bezeichnet schließlich den Ort des beweglichen Objekts.

Ein Vorteil dieses Aspekts der vorliegenden Erfindung besteht darin, dass durch eine Vorabkalibrierung unvorhergesehene Störeinflüsse auf das jeweils von den Spulen erzeugte Magnetfeld berücksichtigt werden können. Dadurch kann eine Positionsbestimmung des beweglichen Objekts sehr genau und zuverlässig stattfinden.

Eine weitere Erkenntnis der vorliegenden Erfindung besteht darin, dass eine Genauigkeit eines Systems zur Positionsbestimmung eines beweglichen Objekts erhöht werden kann, indem Messungen von magnetischen Feldstärken mit Messungen von jeweils zugehörigen Feldrichtungen bzw. -orientierungen kombiniert werden.

Eine Anzahl der in dem System verwendeten Spulen zur Erzeugung statischer Magnetfelder bestimmt, in wie vielen Dimensionen eine Position, Richtung und/oder Bewegung des beweglichen Objekts bestimmt werden kann. Generell erlaubt eine höhere Anzahl von Spulen eine genauere Bestimmung der Position des beweglichen Objekts.

Damit besteht mit dem erfindungsgemäßen Konzept die Möglichkeit zur Positionsbestimmung des beweglichen Objekts, zur Bestimmung einer Orientierung des beweglichen Objekts und die Möglichkeit zur Bestimmung einer Bewegung des beweglichen Objekts basierend auf einer Zuordnung einer magnetischen Feldstärke zu einer Entfernung des beweglichen Objekts von einer das statische Magnetfeld erzeugenden Spule. Somit weisen Ausführungsbeispiele der vorliegenden Erfindung den Vorteil auf, dass eine Positionsbestimmung eines beweglichen Objekts bzw. eines Balls beispielsweise ohne Eingriff in den Spielbetrieb eines Ballspiels erfolgen kann.

Des Weiteren ist das erfindungsgemäße Konzept zur Positionsbestimmung eines beweglichen Objekts beispielsweise gegenüber Personen tolerant, d.h. Einflüsse von Personen, die sich nahe des beweglichen Objekts bewegen bzw. das bewegliche Objekt abdecken, spielen keine Rolle.

Bevorzugte Ausführungsbeispiele der vorliegenden Erfindung werden nachfolgend Bezug nehmend auf die beiliegenden Zeichnungen näher erläutert. Es zeigen:

Fig. 1    ein schematisches Blockschaltbild einer Vorrichtung zum Ansteuern von wenigstens zwei Spulen gemäß einem Ausführungsbeispiel der vorliegenden Erfindung;

Fig. 2a    eine schematische Darstellung magnetischer Feldlinien um eine stromdurchflossene Zylinderspule zur Erläuterung des erfindungsgemäßen Konzepts;

Fig. 2b    eine schematische Darstellung eines Verlaufs einer magnetischen Feldstärke in einem Nahbereich um eine Zylinderspule aufgetragen über einem Abstand von der Zylinderspule;

Fig. 3    eine schematische Darstellung eines Fußballtores mit jeweils einer Spule in einem ersten Pfosten, in einem zweiten Pfosten und in der Querlatte, wobei die Spulen mit einer Vorrichtung zum Ansteuern der Spulen gekoppelt sind, gemäß einem Ausführungsbeispiel der vorliegenden Erfindung;

Fig. 4    ein Flussdiagramm zur Veranschaulichung eines Verfahrens zur Bestimmung einer Position eines beweglichen Objektes gemäß einem Ausführungsbeispiel der vorliegenden Erfindung;

Fig. 5    eine schematische Darstellung eines Fußballtores mit einer ersten Spule gewickelt um die durch Torpfosten und Torquerlatte begrenzte Fläche und einer zweiten Spule gewickelt um die durch Netzaufhängungspfosten und Netzaufhängungsquerlatte begrenzte Fläche, wobei die Spulen mit einer Vorrichtung zum Ansteuern der Spulen gekoppelt sind, gemäß einem Ausführungsbeispiel der vorliegenden Erfindung;

Fig. 6    eine schematische Darstellung einer magnetischen Feldstärkeverteilung innerhalb einer Rechteckspule gemäß Fig. 5;

Fig. 7    eine schematische Darstellung einer Draufsicht auf ein Fußballtor hinter dem sich zwei Spulen befinden, gemäß einem Ausführungsbeispiel der vorliegenden Erfindung;

Fig. 8    eine schematische Darstellung eines beweglichen Objektes für eine Lokalisierung des beweglichen Objektes in einem Ortsbestimmungsbereich gemäß einem Ausführungsbeispiel der vorliegenden Erfindung;

Fig. 9    ein schematisches Blockdiagramm einer Vorrichtung zum Ermitteln von Informationen über eine Position eines beweglichen Objektes in einem Ortsbestimmungsbereichs, gemäß einem Ausführungsbeispiel der vorliegenden Erfindung; und

Fig. 10    ein System zur Positionsbestimmung eines Fußballs mittels Magnetfeldern zur Torentscheidung bei einem Fußballspiel, gemäß einem Ausführungsbeispiel der vorliegenden Erfindung.

Bezüglich der nachfolgenden Beschreibung sollte beachtet werden, dass bei den unterschiedlichen Ausführungsbeispielen gleich oder gleich wirkende Funktionselemente gleiche Bezugszeichen aufweisen und somit die Beschreibungen dieser Funktionselemente in den verschiedenen in den nachfolgend dargestellten Ausführungsbeispielen untereinander austauschbar sind.

Im Nachfolgenden wird der Begriff "Signal" für Ströme oder Spannungen gleichermaßen verwendet, es sei denn es ist explizit etwas anderes angegeben.

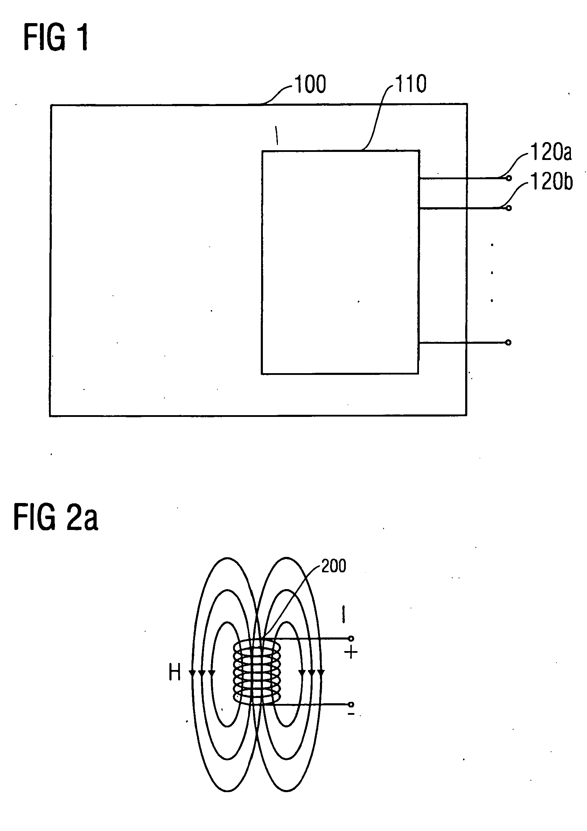

Fig. 1 zeigt ein schematisches Blockschaltbild einer Vorrichtung 100 zum Ansteuern von wenigstens zwei nicht gezeigten Spulen, die an verschiedenen Positionen bezüglich eines Ortsbestimmungsbereichs angeordnet sind, um eine Positionsangabe eines in Fig. 1 nicht gezeigten Objektes zu bewirken, das sich in Reichweite von durch die Spulen erzeugten Magnetfeldern befindet.

Die Vorrichtung 100 weist dazu eine Einrichtung 110 und Anschlüsse 120 auf, von denen der Übersichtlichkeit halber lediglich zwei mit den Bezugszeichen 120a und 120b versehen sind.

Die Einrichtung 110 dient zum Erzeugen von Spulenaktivierungssignalen für wenigstens zwei Spulen mit einem Multiplexverfahren, wobei die Spulen mit den Anschlüssen 120a, b koppelbar sind. Dabei kann das Erzeugen der Spulenaktivierungssignale durch die Einrichtung 110 gemäß einem Ausführungsbeispiel der vorliegenden Erfindung derart erfolgen, dass in einer ersten Zeitdauer $T_1$ nur eine der wenigstens zwei Spulen aktiviert ist und in einer zweiten Zeitdauer $T_2$ lediglich eine andere der wenigstens zwei Spulen aktiviert ist, also gemäß einem Zeitmultiplexverfahren. Ferner ist die Einrichtung 110 gemäß einem Ausführungsbeispiel der vorliegenden Erfindung ausgebildet, um die Spulenaktivierungssignale zeitlich getrennt derart zu erzeugen, dass ein durch eine mit den Anschlüssen 120a,b gekoppelte und angesteuerte Spule erzeugtes Magnetfeld für eine vorbestimmte Zeitdauer konstant bzw. statisch ist.

Gemäß einem weiteren Ausführungsbeispiel der vorliegenden Erfindung kann das Erzeugen der Spulenaktivierungssignale durch die Einrichtung 110 derart erfolgen, dass mit einem Frequenzmultiplexverfahren magnetische Wechselfelder mit den wenigstens zwei Spulen erzeugt werden, so dass ein magnetisches Wechselfeld einer der wenigstens zwei Spulen eine andere Frequenz aufweist als ein magnetisches Wechselfeld einer anderen der wenigstens zwei Spulen.

Gemäß einem Ausführungsbeispiel der vorliegenden Erfindung ist das Spulenaktivierungssignal beispielsweise ein Spulenstrom I. Um mit den an die Anschlüsse 120a,b gekoppelten Spulen statische Magnetfelder unterschiedlicher Polarität bzw. Orientierung erzeugen zu können, ist die Einrichtung 110 ferner ausgebildet, um ebenso die Spulenaktivierungssignale bzw. die Spulenströme mit unterschiedlicher Polarität bzw. Orientierung zu erzeugen.

Um eine Reichweite der mit den Anschlüssen 120a,b gekoppelten Spulen erzeugten Magnetfelder variieren zu können, ist die Einrichtung 110 gemäß einem Ausführungsbeispiel der vorliegenden Erfindung ferner ausgebildet, um die Spulenaktivierungssignale mit einer unterschiedlichen Intensität, d.h. beispielsweise Spulenströme unterschiedlicher Stärke zu erzeugen.

Um das erfindungsgemäße Konzept zur Positionsbestimmung eines beweglichen Objektes mittels Magnetfeldern näher zu erläutern, zeigt Fig. 2a eine schematische Darstellung magnetischer Feldlinien um eine von einem Strom I durchflossene zylindrische Spule 200.

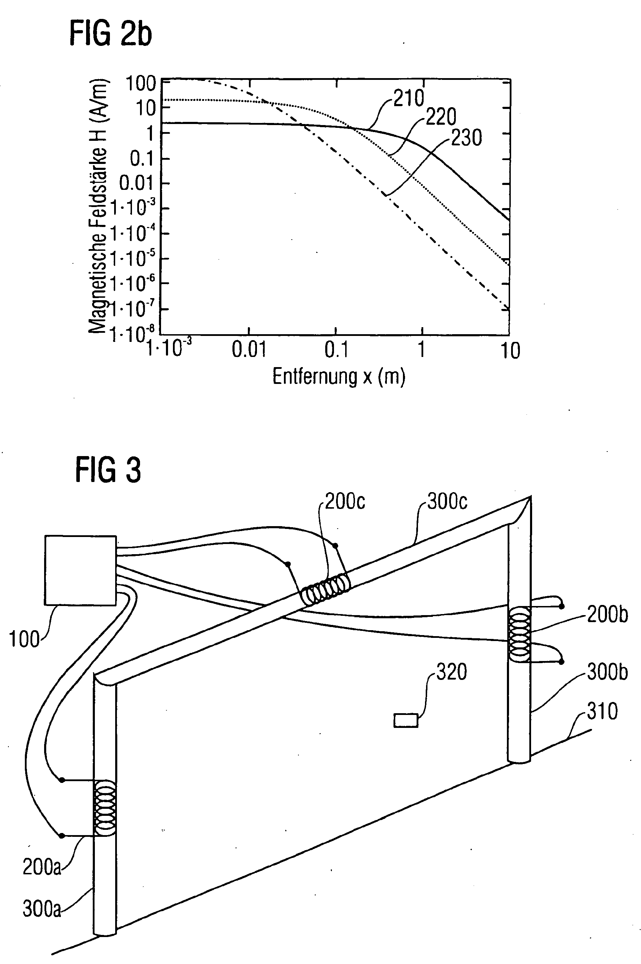

Bekanntermaßen ist mit jeder bewegten Ladung (Elektronen in Leitungen oder im Vakuum), also einem Stromfluss ein magnetisches Feld verbunden. Die der Ursache des magnetischen Feldes zugeordnete Feldgröße ist die magnetische Feldstärke H, unabhängig von den Materialeigenschaften des Raumes. Zur Erzeugung eines statischen magnetischen Feldes können beispielsweise kurze Zylinderspulen oder Leiterschleifen als magnetische Antennen dienen. Generell nimmt die magnetische Feldstärke H mit zunehmendem Abstand von einem stromdurchflossenen Leiter bzw. der stromdurchflossenen Zylinderspule 200 ab. Entfernt man beispielsweise einen Messpunkt aus dem Zentrum der Spule 200 in Richtung der Spulenachse (x-Achse), so wird die Feldstärke H des Magnetfeldes kontinuierlich mit dem Abstand x abnehmen. Dieser Zusammenhang ist exemplarisch in Fig. 2b dargestellt.

Fig. 2b zeigt in logarithmischer Darstellung schematisch einen Verlauf der magnetischen Feldstärke H in einem Nahbereich der stromdurchflossenen Zylinderspule 200 bei zunehmendem Abstand in x-Richtung, d.h. in Richtung der Spulenlängsachse. Dabei kennzeichnet die Kurve mit dem Bezugszeichen 210 exemplarisch einen Feldstärkeverlauf bei einem relativ großen Radius R der Windungen der Spule 200. Die Kurve mit dem Bezugszeichen 220 kennzeichnet entsprechend einen Verlauf der magnetischen Feldstärke H bei einem mittlerem Windungsradius R. Dementsprechend bedeutet die Kurve mit Bezugszeichen 230 einen schematischen Feldstärkeverlauf bei einem kleinen Windungsradius R der Spule 200.

Im freien Raum beträgt der Feldstärkeabfall im sog. Nahfeld der Spule zunächst ca. 60 dB pro Dekade, um dann im Fernfeld bei einer sich ausbildenden elektromagnetischen Welle auf 20 dB pro Dekade abzuflachen. Bei genauerer Betrachtung erkennt man, dass die Feldstärke H je nach Radius (bzw. Fläche) der Spule 200 bis zu einer bestimmten Entfernung x nahezu konstant verläuft, dann jedoch abfällt. Die in Fig. 2b dargestellten magnetischen Feldstärkekurven beziehen sich auf einen Nahbereich der Zylinderspule 200, d.h. einen Bereich um die Zylinderspule 200 von wenigen Metern. Somit ist es möglich, jeder magnetischen Feldstärke H eine Entfernung x von der Zylinderspule 200 zuzuordnen. Beispielsweise ergibt sich bekanntermaßen für einen Feldstärkeverlauf entlang der Spulenlängsachse x einer runden von einem Strom I durchflossenen Spule folgende Beziehung:

$$H = \frac{I \cdot N \cdot R^2}{2 \cdot \sqrt{\left(R^2 + x^2\right)^3}} \quad , \qquad \qquad (1)$$

wobei N die Anzahl der Spulenwindungen, R den Windungsradius und x den Abstand zur Spulenmitte in x-Richtung bedeuten. Als Randbedingung für die Gültigkeit der Beziehung (1) gilt h << R, d.h. eine Spulenhöhe h muss viel kleiner als der Spulenradius sein, und x < λ/2π (λ = Wellenlänge), wobei in einem Abstand x > 2π ein Übergang in das elektromagnetische Fernfeld der Spule 200 beginnt.

Obige Gleichung (1) dient lediglich zur Veranschaulichung der Abhängigkeit der magnetischen Feldstärke von der Entfernung von einer magnetischen Antenne bzw. Spule. Gleichermaßen können Gleichungen aufgestellt werden, die einen Feldstärkeverlauf um eine Spule im dreidimensionalen Raum beschreiben. Zusätzlich zu einem Betrag der magnetischen Feldstärke H existiert auch noch eine Ausrichtung bzw. Orientierung eines magnetischen Feldvektors $\vec{H}$. Werden die drei Komponenten ($H_x$, $H_y$, $H_z$) des magnetischen Feldvektors $\vec{H}$ am Ort des beweglichen Objektes gemessen, so können gemäß einem Ausführungsbeispiel der vorliegenden Erfindung mit einem Gleichungssystem die Raum-Koordinaten (x, y, z) desjenigen Ortes bestimmt werden, an dem der magnetische Feldvektor $\vec{H}$ gemessen wurde. Um Mehrdeutigkeiten ausschließen zu können, benötigt man im Allgemeinen Messwerte des magnetischen Feldvektors $\vec{H}$ von mehreren Spulen.

Gemäß einem weiteren Ausführungsbeispiel der vorliegenden Erfindung ist es möglich, das von der Spule 200 erzeugte magnetische Feld dreidimensional mit einer gewünschten Genauigkeit in einem Ortsbestimmungsbereich um die Spule 200 auszumessen und die Messwerte bzw. die Komponenten ($H_x$, $H_y$, $H_z$) des Feldvektors $\vec{H}$ für jeden rele-

vanten Raumpunkt beispielsweise in einer sogenannten Lookup-Tabelle den jeweiligen Raumkoordinaten (x, y, z) der Raumpunkte zuzuordnen und zu speichern. Genauso ist es natürlich denkbar, dass die Feldstärken und Feldrichtungen gemäß einem weiteren Ausführungsbeispiel der vorliegenden Erfindung in einem interessierenden Bereich um die Spule herum mittels mathematischer Formeln berechnet werden, um anschließend in einer Lookup-Tabelle den entsprechenden Koordinaten (x, y, z) zugeordnet zu werden. Wird anschließend eine Feldstärke und die zugehörige Feldrichtung an einem beliebigen Ort des Ortsbestimmungsbereichs um die Spule herum gemessen, so können die Messwerte daraufhin mit den vorab gemessenen oder berechneten und gespeicherten Werten aus der Lookup-Tabelle verglichen werden. Der Datensatz, der die besten Treffer hat, bezeichnet schließlich den Ort der Messung.

Rotiert das bewegliche Objekt bzw. ein in dem beweglichen Objekt integrierter dreidimensionaler Magnetfeldsensor, so ist es im Allgemeinen nicht möglich, die von dem Magnetfeldsensor gemessenen Komponenten ($H_x$, $H_y$, $H_z$) eines Magnetfeldes einem Raumpunkt in dem Ortsbestimmungsbereich eindeutig zuzuordnen. In diesem Fall kann jedoch gemäß einem Ausführungsbeispiel der vorliegenden Erfindung der Betrag des gemessenen Magnetfeldvektors $|H| = (H_x^2 + H_y^2 + H_z^2)^{1/2}$ eine Information über die Position des beweglichen Objekts in dem Ortbestimmungsbereich liefern. Bei Verwendung nur einer Spule bzw. nur eines Magnetfeldes ergeben sich bzgl. der Position Mehrdeutigkeiten, da Kurven bzw. Flächen um die Spulen herum existieren, auf denen der Betrag des gemessenen Magnetfeldvektors $|H|$ jeweils gleich ist. Verwendet man hingegen wenigstens zwei Spulen, die an verschiedenen Positionen bezüglich des Ortsbestimmungsbereichs angeordnet sind, so können diese Mehrdeutigkeiten verringert bzw. ganz ausgeschlossen werden.

Dieses Prinzip macht man sich nun gemäß Ausführungsbeispielen der vorliegenden Erfindung zunutze, um beispielsweise eine Position eines beweglichen Objekts mittels Magnetfeldern bestimmen zu können. Wie eingangs bereits erwähnt, ist beispielsweise bei einem Fußballspiel eines der umstrittensten Themen, ob in kritischen Situationen der Ball die Torlinie überschritten hat oder nicht. Dazu ist es notwenig, dass die Position des Balls an der Torlinie mit einer Genauigkeit von ca. +/-1,5 cm gemessen werden kann. Eine Anordnung, welche eine Positionsbestimmung eines Fußballs mittels Magnetfeldern ermöglicht, ist schematisch in Fig. 3 gezeigt.

Fig. 3 zeigt eine Vorrichtung 100 zum Ansteuern von drei Spulen 200a-c, welche jeweils in den beiden Torpfosten 300a,b und in einer Querlatte 300c eines Fußballtors 300 angeordnet sind. Das Fußballtor 300 befindet sich auf einer Torlinie 310. In einem Bereich vor dem Fußballtor 300 befindet sich ein bewegliches Objekt 320, dessen Position bestimmt werden soll.

Um die Position des beweglichen Objekts bzw. des Balls 320, bestimmen zu können, ist es notwendig, Feldstärken mehrerer Magnetfelder zu messen. In dem in Fig. 3 exemplarisch gezeigten Beispiel können mit den Spulen 200a-c und der Vorrichtung 100 zum Ansteuern der drei Spulen verschiedene Magnetfelder erzeugt werden. Dabei werden die drei Spulen von der Vorrichtung 100 gemäß einem Ausführungsbeispiel der vorliegenden Erfindung sequentiell angesteuert, d.h. dass in einer ersten Zeitdauer $T_1$ nur eine der drei Spulen 200a-c aktiv ist, in einer zweiten Zeitdauer $T_2$ eine zweite der drei Spulen 200a-c aktiv ist und in einer dritten Zeitdauer $T_3$ die dritte der drei Spulen 200a-c aktiv ist. Somit können beispielsweise mittels eines in dem Fußball 320 angebrachten dreidimensionalen Magnetfeldsensors (in Fig. 3 nicht gezeigt) die jeweils zu den Spulenfeldern gehörenden Feldstärken (Beträge der Magnetfeldvektoren) und deren Richtungen am Ort des Balls 320 gemessen werden und anschließend dazu verwendet werden, um mittels eines Gleichungssystems eine Ortsbestimmung für den Fußball 320 durchzuführen zu können. Um die Position des Balls 320 korrekt ermitteln zu können, sollten die von den Spulen 200a-c erzeugten magnetischen Felder während den Messungen jeweils statisch sein. Gemäß einem Ausführungsbeispiel der vorliegenden Erfindung wird zudem eine Überlagerung des Erdmagnetfelds berücksichtigt.

Das Erdmagnetfeld ist das Magnetfeld, das die Erde umgibt. Es wird von dem sogenannten Geodynamo erzeugt. Oberhalb der Erdoberfläche hat das Feld eine Form ähnlich der eines magnetischen Dipols. Die magnetischen Feldlinien treten im Wesentlichen auf der Südhalbkugel aus dem Kern aus und durch die Nordhalbkugel wieder in den Kern ein. Das Erdmagnetfeld ist größtenteils statisch. Es ist auf weiten Teilen der Erdoberfläche grob in geographischer Nord-Süd-Richtung gerichtet, weshalb eine Kompassnadel in diesen Gebieten etwa nach Norden zeigt. Die Stärke des Erdmagnetfeldes ist mit ca. 20 - 30 Mikrotesla an der Erdoberfläche relativ klein. Das Erdmagnetfeld liegt nicht parallel zur Erdoberfläche, sondern tritt mit einem Inklinationswinkel in die Oberfläche ein.

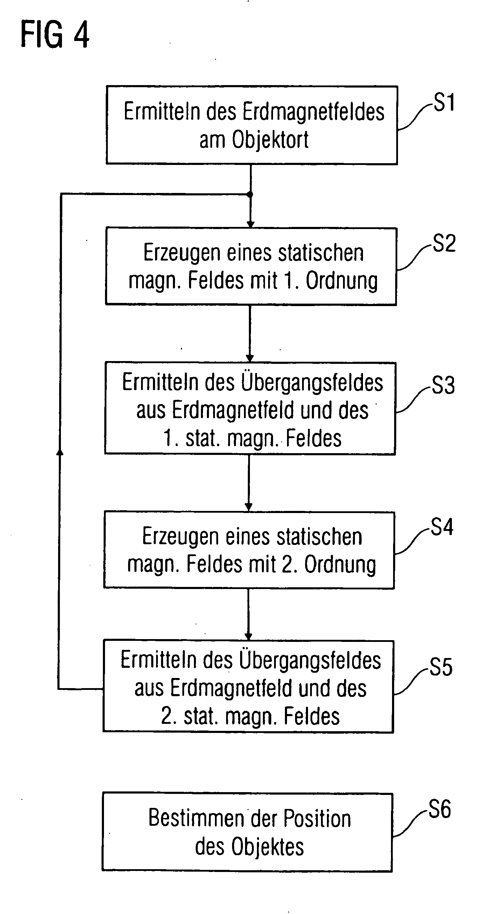

Ein Messzyklus gemäß einem Ausführungsbeispiel der vorliegenden Erfindung zur Positionsbestimmung des Balls 320 ist exemplarisch in Fig. 4 gezeigt. Fig. 4 zeigt dazu ein Flussdiagram des Messzyklus mit Schritten S1 bis S6.

In einem ersten Schritt S1 des Messzyklus ist keine der Spulen 200a-c bestromt. In diesem Schritt S1 misst ein Magnetfeldsensor im Ball 320 die Stärke und die Richtung des Erdmagnetfelds relativ zum Ball 320. In einem zweiten Schritt S2 wird eine erste der drei Spulen 200a-c bestromt, beispielsweise Spule 200a. Der Magnetfeldsensor im Ball 320 misst nun in Schritt S3 die Stärke und die Richtung der Kombination des von der Spule 200a erzeugten Magnetfelds mit dem Erdmagnetfeld. Die Messung wird in der Zeit durchgeführt, in der das Magnetfeld der Spule konstant bzw. statisch ist. Während des Auf- und Abbaus des Magnetfelds der Spule 200a werden keine Messungen durchgeführt. Nachdem die Messung des Schritts S3 beendet ist, wird in einem Schritt S4 der Strom in der Spule umgepolt und die Messung wird wiederholt, d.h. der Magnetfeldsensor im Ball 320 misst in Schritt S5 die Stärke und die Richtung der Kombination des von der Spule 200a erzeugten, umgepolten Magnetfelds mit dem Erdmagnetfeld. Eine Kombination der beiden Messungen der Schritte S3 und S5 ermöglicht es, einen Effekt des Erdmagnetfeldes herauszurechnen. Nach dem Schritt S5 ist der Messzyklus für die erste Spule 200a beendet und die Schritte S1 - S5 werden für eine nächste der verbleibenden Spulen 200b,c wiederholt, usw. Zwischen den Messungen der Spulenfelder wird also immer das Erdmagnetfeld gemessen. Wurden die Schritte S1 bis S5 für sämtliche Spulen durchgeführt, kann in einem Schritt S6 auf Basis der Messergebnisse der Schritte S1 bis S5 die Position des Balls 320 ermittelt werden. Dies kann beispielsweise durch Lösen eines Gleichungssystems erfolgen, oder durch Korrelation der Messergebnisse mit gespeicherten Kalibrierdaten.

Ein Fußball kann in bestimmten Situationen in einem Fußballspiel Geschwindigkeiten von bis zu 140 km/h, d.h. ca. 40 m/s erreichen. Wird eine Messgenauigkeit von ca. +/- 1,5 cm gefordert, so sollte vorzugsweise der gesamte Messzyklus inklusive aller Spulen 200a-c in einem Zeitraum von ca. 375 $\mu$s geschehen. Wenn dieser Zeitraum auf die verschiedenen verwendeten Spulen aufgeteilt wird, ergeben sich beispielsweise für ein Drei-Spulen-System, wie in Fig. 3 gezeigt, pro Messung und Spule ca. 125 $\mu$s, die zur Messung zur Verfügung stehen. Der Strom I durch eine Spule verhält sich nach Einschalten abhängig von der Zeit t bekanntermaßen gemäß

$$I(t) = I_0 \cdot \left(1 - e^{t/\tau}\right) \quad , \qquad\qquad (2)$$

wobei $\tau$ eine Zeitkonstante gemäß $\tau = L/R_{Sp}$ bedeutet. Dabei ist $R_{Sp}$ beispielsweise der Leiterwiderstand der Spule und L die Induktivität der Spule. Eine Umpolung des Stroms durch eine Spule innerhalb einer kurzen Zeit kann demnach beispielsweise durch eine entsprechend hoch gewählte Versorgungsspannung der Spule gewährleistet werden, durch eine geringe Induktivität L, oder durch einen niedrigen Leiterwiderstand $R_{Sp}$.

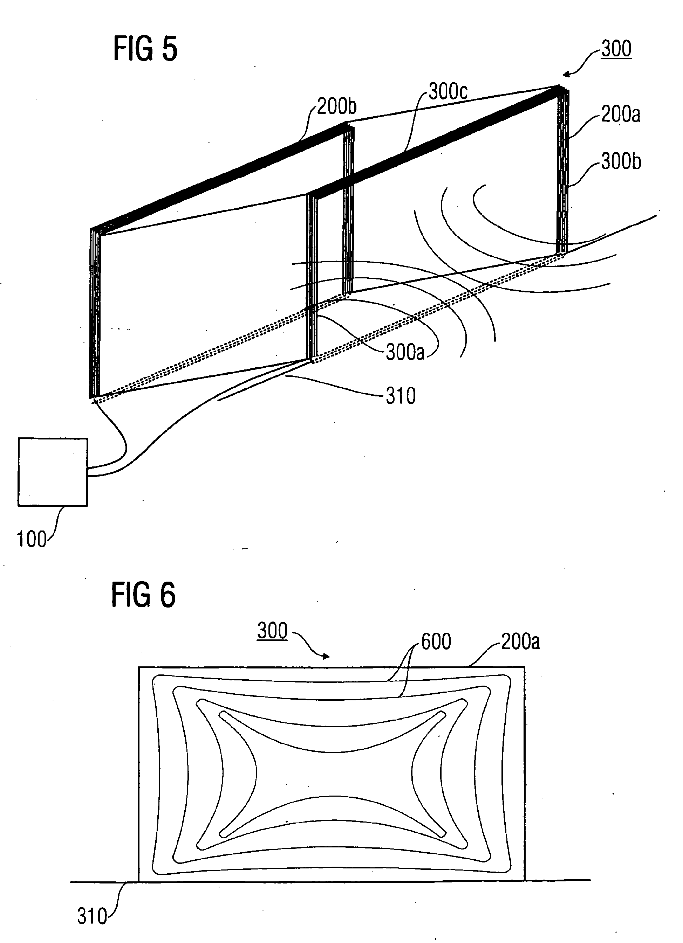

Nachdem im Vorhergehenden anhand der Fig. 3 Ausführungsbeispiele der vorliegenden Erfindung beschrieben wurden, bei denen sich einzelne Spulen jeweils in den Torpfosten 300a,b und der Querlatte 300c eines Tores 300 befinden, werden nun im nachfolgenden anhand von Fig. 5 Ausführungsbeispiele der vorliegenden Erfindung beschrieben, bei denen das gesamte Tor 300 Teil einer Spule bzw. einer Helmholtz-Spule ist.

Dazu zeigt Fig. 5 ein Fußballtor 300, das einen ersten Pfosten 300a, einen zweiten Pfosten 300b und eine Querlatte 300c umfasst. Ferner weist das Fußballtor 300 eine Netzaufhängung mit einem ersten Pfosten 300d, einen zweiten Pfosten 300e und einer Querlatte 300f auf. Das Fußballtor 300 steht mit seinen Pfosten 300a, 300b auf einer Torlinie 310. Die Torpfosten 300a,b, die Querlatte 300c und die Torlinie 310 bilden einen Rahmen einer rechteckigen Spule 200a, die gemäß einem Ausführungsbeispiel der vorliegenden Erfindung in den Torpfosten 300a, b, in der Querlatte 300c und unterhalb der Torlinie 310 um die Toröffnungsfläche gewickelt ist. Gleichermaßen ist eine zu der Spule 200a zumindest näherungsweise identische Spule 200b innerhalb der Netzaufhängungspfosten 300d,e, der Netzaufhängungsquerlatte 300f und unterhalb der Erdoberfläche gewickelt. Die beiden Spulen 200a,b bilden gemäß einem Ausführungsbeispiel der vorliegenden Erfindung also ein Spulenpaar ähnlich einem Helmholtz-Spulenpaar. Ferner zeigt Fig. 5 in einem Bereich vor dem Fußballtor 300 ein bewegliches Objekt bzw. Ball 320, dessen Position bestimmt werden soll. Ferner zeigt Fig. 5 eine Vorrichtung 100 zum Ansteuern der zwei Spulen 200a,b.

Wie bereits anhand von Fig. 1 beschrieben wurde, können die beiden Spulen 200a,b in einem Multiplexverfahren angesteuert werden. Dabei kann es sich gemäß einem Ausführungsbeispiel der vorliegenden Erfindung um ein Zeitmultiplexverfahren handeln, also eine zeitlich sequentielle Ansteuerung der beiden Spulen 200a,b, wie sie anhand des in Fig. 4 gezeigten Flussdiagramms bereits beschrieben wurde.

Wie im Vorhergehenden bereits beschrieben wurde, ist es aufgrund einer Rotation des Balls 320 notwendig, Feldstärken bzw. Beträge mehrerer Magnetfelder zu messen, um die Position des Balls 320 bestimmen zu können.

Das Magnetfeld einer rechteckigen Spule, wie sie in Fig. 5 gezeigt ist, ist innerhalb der Spule im Allgemeinen nicht homogen, wie es in Fig. 6 veranschaulicht ist.

Fig. 6 zeigt eine Draufsicht auf die Tor- bzw. Spulenöffnungsfläche der Spule 200a. Die mit dem Bezugszeichen 600 gekennzeichneten Linien bezeichnen schematisch eine Feldstärkeverteilung innerhalb der rechteckigen Spule 200a. Dabei bedeutet ein geringer Abstand zweier benachbarter Linien 600 eine vergleichsweise hohe Feldstärke des magnetischen Feldes an der entsprechenden Position, wohingegen ein großer Abstand zweier Linien 600 einen vergleichsweise geringen Betrag der magnetischen Feldstärke innerhalb der Spule 200a bedeutet. Fig. 6 lässt erkennen, dass insbesondere in den Eckbereichen der Spule 200a größere magnetische Feldstärken vorherrschen als in der Mitte der Spule 200a. Dieser Sachverhalt lässt sich beispielsweise auch analytisch mit dem Gesetz von Biot-Savart zeigen. Im allgemeinen lässt sich ein Beitrag $d\vec{H}$ eines von einem Strom I durchflossenen infinitesimalen Leiterstücks $d\vec{H}$ zum Magnetfeld $\vec{H}$ in einem Punkt P gemäß

$$d\vec{H}(\vec{r}) = \frac{Id\vec{l} \times \vec{r}}{4\pi r^3} \qquad (3)$$

berechnen. Dabei bedeutet $\vec{r}$ einen Verbindungsvektor vom Leiterstück zum Punkt P, an dem das Magnetfeld berechnet werden sollen. Für einen beliebigen (nicht notwendiger Weise geschlossenen) Leiter erhält man das Magnetfeld H als Integral über den Leiter gemäß

$$\vec{H} = \frac{1}{4\pi} \int \frac{Id\vec{l} \times \vec{r}}{r^3} \, . \qquad (4)$$

Durch die in Fig. 6 dargestellte inhomogene Verteilung des Magnetfelds innerhalb der Spule 200a entstehen Mehrdeutigkeiten bezüglich der Position des Balls 320. Würde lediglich die erste Spule 200a zur Positionsbestimmung des Balls 320 herangezogen, so könnte beispielsweise anhand einem gemessenen Magnetfeldbetrag nicht unterschieden werden, ob sich der Ball nahe einem Eck der Spule 200a bzw. des Tors 300 kurz vor bzw. hinter der Torlinie befindet, oder beispielsweise in der Mitte der Spule 200a bzw. des Tors 300 auf Höhe der Torlinie 310 befindet. Es wird einen Punkt nahe dem Eckbereich der Spule 200a vor der Torlinie geben, an dem der Betrag der Magnetfeldstärke zumindest näherungsweise genauso groß ist, wie an einem Punkt in der Mitte der Spule 200a auf Höhe der Torlinie 310 bzw. in der Ebene, die durch die Torlinie 310 und das Fußballtor 300 aufgespannt wird.

Um genau diese Mehrdeutigkeiten eliminieren zu können, ist die zweite Spule 200b hinter dem Fußballtor 300 in der Netzaufhängung vorteilhaft. Durch eine isolierte Messung des von der zweiten Spule 200b in einer zweiten Zeitdauer erzeugten Magnetfeldes an dem Ort des Balls bzw. des beweglichen Objekts 320, können genug Informationen erhalten werden, um in Kombination mit der isolierten Messung des von der ersten Spule 200a in einer ersten Zeitdauer erzeugten Magnetfeldes eine genaue Position des Balls 320 ermitteln zu können.

Bei dem in Fig. 6 gezeigten Ausführungsbeispiel ist lediglich von Interesse, ob sich der Ball vor oder hinter der Torlinie 310 befindet. Wo der Ball 320 im Tor 300 die Torlinie 310 überschritten hat, ist hingegen nicht von Interesse. Durch das Hinzuziehen der Messwerte der zweiten Spule 200b kann nun bestimmt werden, ob sich der Ball 320 nahe einem Eckbereich der Spule 200a vor der Torlinie 310, hinter der Torlinie 310 oder inmitten der Spule 200a bzw. des Tors 300 auf Höhe der Torlinie 310 befindet.

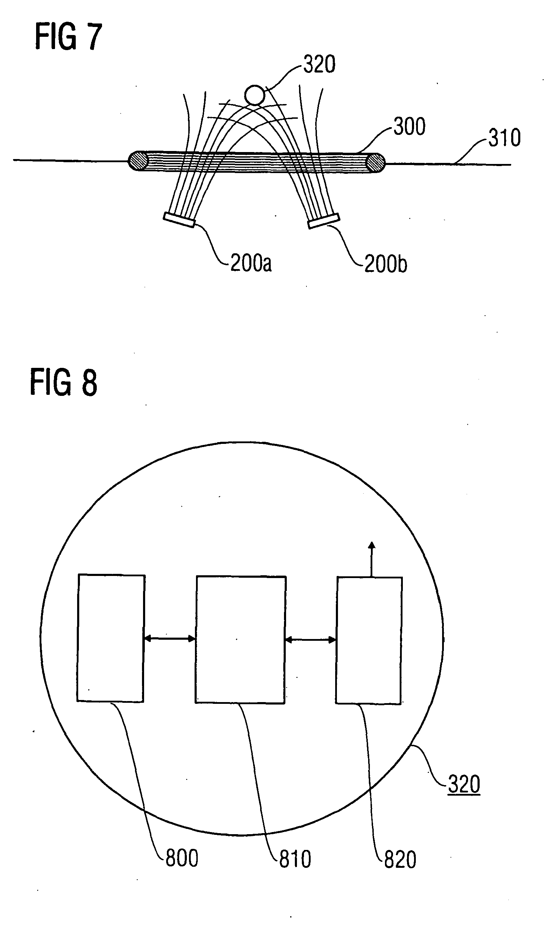

Ein weiteres Ausführungsbeispiel der vorliegenden Erfindung ist in Fig. 7 gezeigt.

Fig. 7 zeigt eine Draufsicht auf ein Fußballtor 300, dass auf einer Torlinie 310 steht. Hinter der Torlinie 310 befindet sich eine erste Spule 200a und eine zweite Spule 200b. Die Spulenachsen der beiden Spulen 200a,b zeigen zumindest näherungsweise in Richtung des Spielfeldes.

Ferner soll angenommen werden, dass die beiden Spulen von einer in Fig. 7 nicht gezeigten Vorrichtung zum Ansteuern der zwei Spulen, wie sie im vorhergehenden bereits beschrieben wurde, angesteuert werden. Dabei können die beiden Spulen 200a,b sowohl in einem Zeitmultiplexverfahren, als auch in einem Frequenzmultiplexverfahren angesteuert werden.

Ein Ball 320, der sich in dem Ortsbestimmungsbereich der beiden Spulen 200a,b befindet, kann mittels eines dreidimensionalen Magnetfeldsensors erfindungsgemäß Magnetfeldvektoren des von der ersten Spule 200a erzeugten Magnetfeldes und des von der zweiten Spule 200b erzeugten Magnetfeldes messen, und beispielsweise an eine zentrale Auswertevorrichtung übermitteln. Die Positionsbestimmung kann auch bei dem in Fig. 7 gezeigten Ausführungsbeispiel der vorliegenden Erfindung gemäß dem Anhand von Fig. 4 beschrieben Verfahren erfolgen.

Ein Vorteil des in Fig. 7 gezeigten Ausführungsbeispiels der vorliegenden Erfindung besteht darin, dass durch die Anordnung der beiden Spulen 200a,b klar entschieden werden kann, ob sich der Ball 320 vor oder hinter der Torlinie 310 befindet.

Bei dem Multiplexverfahren kann es sich neben dem im Vorhergehenden bereits beschriebenen Zeitmultiplexverfahren gemäß einem weiteren Ausführungsbeispiel der vorliegenden Erfindung auch um ein Frequenzmultiplexverfahren handeln, also eine frequenzmäßig unterschiedliche Erzeugung von magnetischen Wechselfeldern durch entsprechende Ansteuerung der beiden Spulen 200a,b. Bei dem Frequenzmultiplexverfahren können die Spulen 200a,b von der Vorrichtung 100 zum Ansteuern der Spulen also mit unterschiedlichen Frequenzen $f_1$ und $f_2$ angesteuert werden.

Im Folgenden soll anhand von Fig. 8 die Funktionsweise des Balls bzw. des beweglichen Objekts 320 näher erläutert werden.

Fig. 8 zeigt ein bewegliches Objekt 320 für eine Lokalisierung an einem Ortsbestimmungsbereich, in dem wenigstens zwei Spulen (nicht gezeigt), die an verschiedenen Positionen bezüglich des Ortsbestimmungsbereichs angeordnet sind und gemäß einer Steuersequenz angesteuert werden. Das bewegliche Objekt 320 weist einen Magnetfeldsensor 800 auf, der mit einer Steuereinrichtung 810 gekoppelt ist. Ferner ist die Steuereinrichtung 810 mit einem Sender 820 verschaltet.

Der Magnetfeldsensor 800 dient zum Erfassen eines Magnetfeldes, in dem sich das bewegliche Objekt 320 befindet. Beispielsweise kann es sich um einen dreidimensionalen Magnetfeldsensor handeln, bei dem beispielsweise eine Digitalisierung der Messwerte auf einem Sensorchip bereits integriert ist. Die Steuereinrichtung 810 dient zum Steuern des Magnetfeldsensors 800 und/oder des Senders 820, so dass beispielsweise gemäß der Steuersequenz aus Fig. 4 Magnetfeldmesswerte an einen in Fig. 8 nicht gezeigten Zentralrechner gesendet werden können. Der Sender 820 kann das Senden von wenigstens einem Messwert ermöglichen und beispielsweise als Funksender ausgebildet sein, um beispielsweise bei einem Fußballspiel zur Datenauswertung nicht in den Spielbetrieb eingreifen zu müssen.

Gemäß einem weiteren Ausführungsbeispiel der vorliegenden Erfindung kann der Sender 820 auch eine Datenschnittstelle aufweisen, um in einem in Fig. 8 nicht gezeigten Speicher des beweglichen Objektes 320 gespeicherte Messwerte drahtgebunden auslesen zu können.

Ferner benötigt das bewegliche Objekt 320 eine Energieversorgungseinrichtung zur Energieversorgung des beweglichen Objekts 320. Gemäß einem Ausführungsbeispiel der vorliegenden Erfindung kann eine Energieversorgung durch eine Batterie gewährleistet werden. Um eine lange Lebensdauer einer Energieversorgung des Balls 320 zu gewährleisten, ist es gemäß einem Ausführungsbeispiel der vorliegenden Erfindung ferner möglich, diesen aktivieren und deaktivieren zu können. Dies sollte vorzugsweise im Hinblick darauf geschehen, möglichst wenig Eingriffe in den Spielbetrieb notwendig zu machen.

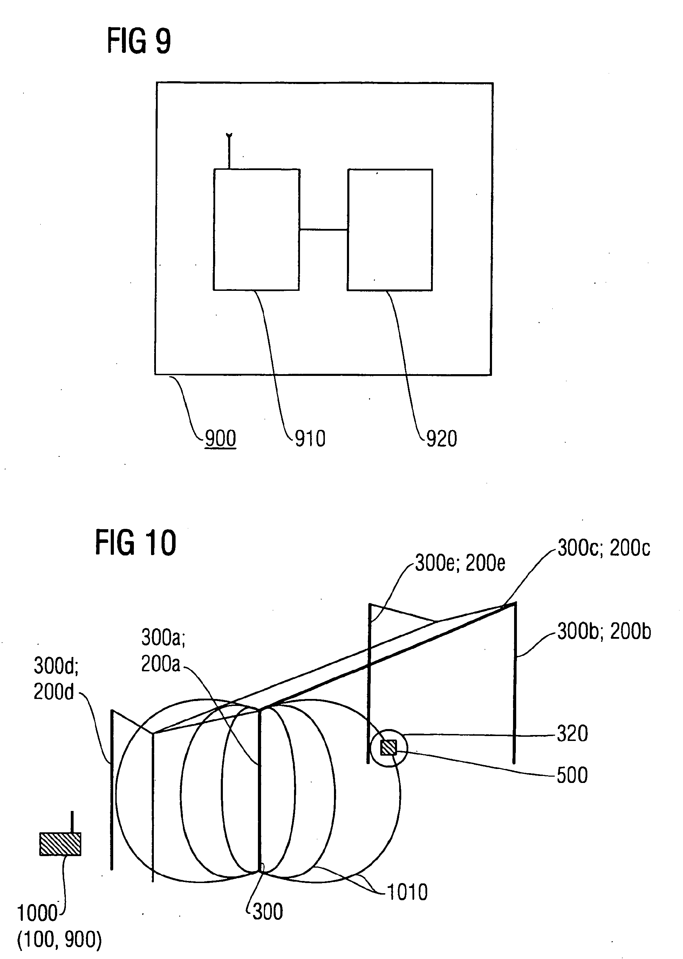

Ist der Sender 820 als Funksender ausgebildet, so können die Messwerte per Funk von dem beweglichen Objekt bzw. dem Ball 320 beispielsweise an einen zentralen Rechner bzw. eine Vorrichtung zum Ermitteln von Informationen über die Position des beweglichen Objektes 320 übertragen werden, wo die momentane Position, eine Rotation und eine Geschwindigkeit des Balls 320 auf Basis der übermittelten Magnetfeld-Messwerte berechnet werden können. Dazu zeigt Fig. 9 ein schematisches Blockdiagramm einer Vorrichtung zum Ermitteln von Informationen über die Position des beweglichen Objektes 320 in einem Ortsbestimmungsbereich, in dem wenigstens zwei Spulen an verschiedenen Positionen angeordnet sind, die gemäß einer Steuersequenz angesteuert werden, um mit einem Multiplexverfahren jeweils ein Magnetfeld zu erzeugen.

Fig. 9 zeigt eine Vorrichtung 900 zum Ermitteln von Informationen über die Position des beweglichen Objekts bzw. des Balls 320, wobei die Vorrichtung 900 einen Empfänger 910 aufweist, der mit einer Auswertungseinrichtung 920 gekoppelt ist.

Gemäß einem Ausführungsbeispiel der vorliegenden Erfindung kann der Empfänger 910 beispielsweise ein Funkempfänger sein. Es soll darauf hingewiesen werden, dass der Empfänger 910 ferner auch eine Schnittstelle aufweisen könnte, um mit dem beweglichen Objekt 320 beispielsweise drahtgebunden gekoppelt zu werden, um die Messwerte der Magnetfelder auslesen zu können.

Wird das im Vorhergehenden bereits beschriebene Frequenzmultiplexverfahren eingesetzt, so umfasst gemäß einem Ausführungsbeispiel der vorliegenden Erfindung die Vorrichtung 900 zum Ermitteln von Informationen über die Position des beweglichen Objekts bzw. des Balls 320 eine Filtereinrichtung, insbesondere eine Bandpassfiltereinrichtung, um die von dem Ball 320 übertragenen Magnetfeldmesswerte jeweils den wenigstens zwei Spulen 200a,b zuordnen zu können. Weist ein Bandpassfilter einen Durchlassbereich um die Frequenz $f_1$ des magnetischen Wechselfeldes der ersten Spule 200a auf, so können hiermit die Magnetfeldmesswerte herausgefiltert werden, die der ersten Spule 200a zuordenbar sind. Demzufolge können mit einem Bandpassfilter mit einem Durchlassbereich um die Frequenz $f_2$ des magnetischen Wechselfeldes der zweiten Spule 200b diejenigen Magnetfeldmesswerte herausgefiltert werden, die der Spule 200b zugeordnet werden können. Weist die Vorrichtung 900 zum Ermitteln von Informationen über die Position des beweglichen Objekts bzw. des Balls 320 weiterhin noch zusätzlich einen Tiefpassfilter auf, so können bei dem Frequenzmultiplexverfahren auch die Messwerte des statischen Erdmagnetfeldes herausgefiltert werden.

Gemäß einem Ausführungsbeispiel der vorliegenden Erfindung ist die Auswertungseinrichtung 920 ausgebildet, um die Informationen über die Position des beweglichen Objektes 320 durch Lösen eines Gleichungssystems zu erhalten, in das die Sequenz von Messwerten der Magnetfelder bezüglich der wenigstens zwei Spulen eingesetzt wird. Wie im Vorhergehenden bereits beschrieben, kann gemäß einem Ausführungsbeispiel der vorliegenden Erfindung die Auswertungseinrichtung 920 auch derart ausgebildet sein, um die Information über die Position des beweglichen Objektes 320 durch Vergleichen der Messwerte der Sequenz von Messwerten der Magnetfelder mit vorab bestimmten Werten zu erhalten, die Positionen des beweglichen Objektes 320 in dem Ortsbestimmungsbereichs entsprechen. Dazu können beispielsweise die Feldstärken und die Feldrichtungen der einzelnen Spulenfelder im Torraum vorab berechnet oder gemessen werden. Die Messwerte des Balls 320 werden dann mit diesen berechneten bzw. gemessenen Werten verglichen. Der Datensatz der die besten Treffer hat, bezeichnet schließlich den Ort des Balls 320.

Eine Genauigkeit der Positionsbestimmung kann gemäß einem Ausführungsbeispiel der vorliegenden Erfindung erhöht werden, indem die Messungen der magnetischen Feldstärken mit den Messungen der zugehörigen Feldrichtungen kombiniert werden. Somit kann beispielsweise eine Plausibilitätsprüfung stattfinden und Mehrdeutigkeiten können ausgeschlossen werden. Durch die Messung des Feldvektors $\vec{H}_{erde}$ des Erdmagnetfeldes am Ort des beweglichen Objektes 320 und anschließender Übermittlung der Messdaten an die Auswerteinrichtung 920, kann in der Auswerteinrichtung 920 gemäß einem Ausführungsbeispiel der vorliegenden Erfindung die Rotationsgeschwindigkeit des Balls bzw. des beweglichen Objekts 320 bestimmt werden und mittels vorher bestimmter Positionswerte eine Ballgeschwindigkeit und eine Flugrichtung bestimmt werden. Diese Informationen können zusammen mit weiteren bekannten physikalischen Eigenschaften des Balls 320 eine zusätzliche Fehlerkorrektur für nachfolgende Messungen bzw. Positionsermittlungen ermöglichen.

Nachdem der Ort des beweglichen Objekts bzw. des Balls 320 von der Auswerteeinrichtung 920 berechnet ist, wird beispielsweise geprüft, ob der Ball 320 die Torlinie überschritten hat. Dazu können bekannte Koordinaten der Torlinie herangezogen werden. Stellt die Vorrichtung 900 ein Ereignis "Tor" fest, so kann die Vorrichtung 900 gemäß einem Ausführungsbeispiel der vorliegenden Erfindung ferner ausgebildet sein, um ein entsprechendes Signal, beispielsweise per Funk, an eine Uhr eines Schiedsrichters übermitteln.

Zusammenfassend soll nun anhand von Fig. 10 ein Positionsbestimmungssystem zur Bestimmung der Position eines beweglichen Objekts bzw. eines Balls gemäß einem Ausführungsbeispiel der vorliegenden Erfindung beschrieben werden, welches Ausführungsbeispiele der im Vorhergehenden beschriebenen erfindungsgemäßen Systemkomponenten aufweist.

Fig. 10 zeigt ein Fußballtor 300, das einen ersten Pfosten 300a, einen zweiten Pfosten 300b und eine Querlatte 300c umfasst. Ferner weist das Fußballtor 300 eine erste Netzaufhängung 300d und eine zweite Netzaufhängung 300e auf. Der erste Pfosten 300a weist eine erste Spule 200a auf, der zweite Pfosten 300b weist eine zweite Spule 200b auf, die Querlatte 300c weist eine dritte Spule 200c auf, die erste Netzaufhängung 300d weist eine vierte Spule 200d auf und die zweite Netzaufhängung 300e weist eine fünfte Spule 200e auf. Ferner zeigt Fig. 10 einen sich im Torraum bzw. in dem Ortsbestimmungsbereich befindlichen Ball 320, der einen dreidimensionalen Magnetfeldsensor 800 aufweist. Ferner weist das in Fig. 10 gezeigte System eine zentrale Steuer- und Auswertevorrichtung 1000 auf. Mit dem Bezugszeichen 1010 sind exemplarisch von der ersten Spule 200a ausgehende magnetische Feldlinien gekennzeichnet.

Die zentrale Steuer- und Auswertevorrichtung 1000 weist eine anhand von Fig. 1 beschriebene Vorrichtung 100 zum Ansteuern der Spulen 200a-e auf, sowie eine anhand von Fig. 9 beschriebene Vorrichtung 900 zum Ermitteln von Informationen über die Ballposition. Die Ermittlung der Positionen des Balls 320 erfolgt beispielsweise gemäß dem anhand von Fig. 4 beschriebenen erfindungsgemäßen Verfahren, wobei bei dem in Fig. 7 gezeigten Ausführungsbeispiel der vorliegenden Erfindung insgesamt fünf Spulen 200a-e zum Einsatz kommen. Natürlich könnte auch das im Vorhergehenden beschriebene Frequenzmultiplexverfahren zum Einsatz kommen. Generell ist zu bemerken, dass eine Verwendung einer höheren Anzahl von Spulen die Genauigkeit der Positionsbestimmung des Balls 320 erhöhen kann.

Des Weiteren umfasst gemäß einem Ausführungsbeispiel der vorliegenden Erfindung die zentrale Steuer- und Auswertevorrichtung 1000 eine Einrichtung zum Übermitteln von Informationen darüber, welche Spule der fünf Spulen 200a-e gerade von der Einrichtung zum Erzeugen von Spulenaktivierungssignalen angesteuert wird, um eine zeitliche Synchronisation zwischen der Einrichtung zum Erzeugen von Spulenaktivierungssignalen und des Messsystems des Balls 320 zu ermöglichen. Die Übermittlung der Spuleninformation könnte dabei beispielsweise mittels eines Funksenders erfolgen. Denkbar ist auch eine Codierung der Spuleninformation durch eine bestimmte Ansteuersequenz der jeweiligen Spulen. Vorteilhafterweise überträgt der Ball 320 gemäß einem Ausführungsbeispiel der vorliegenden Erfindung zusätzlich zu den Magnetfeldmessdaten auch Informationen über die jeweilige Spule, der die Magnetfeldmessdaten entsprechen an die Vorrichtung zum Ermitteln von Informationen über die Ballposition.

Gemäß einem weiteren Ausführungsbeispiel der vorliegenden Erfindung kann eine Ansteuersequenz für die Spulen vorbestimmt sein derart, dass die zentrale Steuer- und Auswertevorrichtung 1000 lediglich eine Einrichtung zum Übermitteln einer Information über einen Start der Ansteuersequenz der Spulenaktivierungssignale aufzuweisen braucht. Empfängt der Ball 320 dieses Startsignal von der Einrichtung, erfolgt die Magnetfeldmessung im Ball analog zu der Ansteuersequenz für die Spulen.

Wird das Frequenzmultiplexverfahren eingesetzt, so umfasst gemäß einem Ausführungsbeispiel der vorliegenden Erfindung die zentrale Steuer- und Auswertevorrichtung 1000 eine Filtereinrichtung, insbesondere eine Bandpassfiltereinrichtung, um die von dem Ball 320 übertragenen Magnetfeldmesswerte jeweils den Spulen 200a-e zuordnen zu können.

Bei der erfindungsgemäßen Ortung mit Hilfe von Magnetfeldern ist es vorteilhaft, wenn die Feldgeometrie der jeweiligen Magnetfelder möglichst ungestört bzw. physikalisch ideal ist. Mögliche Einflüsse auf die Feldgeometrie sind beispielsweise ferromagnetische Objekte in der Nähe des Tors 300, induzierte Wirbelströme durch bewegte Objekte in Tornähe oder elektrische Systeme, wie beispielsweise Stromkabel, in Tornähe. Um einen Einfluss von ferromagnetischen Objekten (z.B. die Unterkonstruktion für einen ausfahrbaren Rasen in einem Fußballstadion) zu beseitigen, kann nach einem Einbau des in Fig. 10 exemplarisch gezeigten erfindungsgemäßen Systems beispielsweise mit Hilfe eines sogenannten Torscanners eine Verzerrung des Magnetfeldes in unmittelbarer Nähe der Torlinie gemessen werden. Da diese Einflüsse statisch sind, können diese Messwerte bei der Ortsbestimmung des Balls 320 berücksichtigt werden. Dies kann beispielsweise mittels einer Korrekturtabelle in einem Speicher der zentralen Steuer-/Auswertevorrichtung 1000 erreicht werden.

Gemäß einem Ausführungsbeispiel der vorliegenden Erfindung könnte die zentrale Steuer-/Auswertevorrichtung 1000 eine Vorrichtung zum Ermitteln von Informationen über die Ballposition aufweisen, die ausgebildet ist, um differentielle Magnetfeld-Messwerte zur Positionsermittlung heranzuziehen, d.h. es können nicht nur. absolute Feldstärken der den einzelnen Spulen zuordenbaren Magnetfelder am Ort des beweglichen Objektes bestimmt werden, sondern auch differentielle Magnetfelder bzw. Magnetfelddifferenzen zwischen den den einzelnen Spulen zuordenbaren Magnetfeldern. Indem Magnetfelddifferenzen am Ort des beweglichen Objektes betrachtet werden, können beispielsweise von außen einwirkende Störeinflüsse leichter vernachlässigt werden.

Wenn sich leitfähige Objekte (auch Personen) in einem Magnetfeld bewegen, dann kann in diesen Objekten ein Magnetfeld induziert werden. Dieses Magnetfeld könnte die Feldgeometrie der durch die Spulen 200a-e erzeugten Magnetfelder beeinflussen. Bei einem Fußballspiel bewegen sich die Spieler allerdings nicht so schnell, als dass eine merkliche Induktion hervorgerufen werden könnte. Wie im Vorhergehenden bereits beschrieben wurde, kann der Ball 320 allerdings Geschwindigkeiten von bis zu 140 km/h erreichen. Deshalb ist bei einer Implementierung vorzugsweise darauf zu achten, dass die Elektronik in dem Ball 320 möglichst klein ist und keine großen leitfähigen Flächen aufweist.

Ein Einfluss auf die durch die Spulen 200a-e erzeugten Magnetfelder durch sich in der Nähe der Spulen 200a-e befindliche Stromkabel ist relativ gering. Ein Stromkabel weist zumeist einen Hin- und einen Rückleiter auf, so dass sich die Magnetfelder des Hin- und Rückleiters gegenseitig aufheben. Selbst bei Einzelleitern wäre der Einfluss relativ gering, da bei einer Netzfrequenz von 50 Hz die Feldeinwirkung einer leichten Änderung des Erdmagnetfeldes gleichkommen würde. Dies wird aber erfindungsgemäß schon durch das Messverfahren mit Polaritätswechsel der von den Spulen 200a-e erzeugten Magnetfelder berücksichtigt.

Gemäß einem Ausführungsbeispiel der vorliegenden Erfindung kann der Ball 320 in der Nähe des Tors 300 über ein schwaches Signal aktiviert werden, welches beispielsweise von einem dafür ausgebildeten Sender der zentralen Steuer/Auswerteeinrichtung 1000 gesendet wird. Dazu weist der Ball 320 gemäß einem Ausführungsbeispiel der vorliegenden Erfindung einen Empfänger auf, der das Aktivierungssignal empfängt und daraufhin über die Steuereinrichtung bzw. einen Prozessor das Messsystem im Ball in der Nähe des Tors 300 aktiviert. Gemäß einem Ausführungsbeispiel der vorliegenden Erfindung schaltet der Prozessor im Ball den Empfänger beispielsweise alle 100 ms kurz ein. Sobald das Aktivierungssignal vom Ball 320 erkannt wird, geht der Ball in Dauerbetrieb.

Gemäß einem weiteren Ausführungsbeispiel der vorliegenden Erfindung kann am Tor 300 bzw. in der Nähe des Tors 300 über eine Spule ein dauerhaftes Magnetfeld erzeugt werden. Kommt der Ball 320 in die Nähe des Tors 300, so wird dies durch den dreidimensionalen Magnetfeldsensor 800 im Ball 320 erkannt. Sobald dies der Fall ist, schaltet sich das Messsystem im Ball 320 ein. Auch hier können beispielsweise die Sensoren nur alle 100 Millisekunden kurzzeitig in Betrieb genommen werden.

Bei den beiden im Vorhergehenden beschriebenen erfindungsgemäßen Vorgehensweisen wird eine Detektion immer nur kurz eingeschaltet um Energie zu sparen. Wenn der Ball 320 über sehr lange Zeit, beispielsweise einen Tag, kein Signal mehr erkennt, wird ein Timer zur Detektion beispielsweise auf zehn Sekunden hochgestellt. Dadurch kann der Energieverbrauch nochmals drastisch gesenkt werden. Da gemäß einem Ausführungsbeispiel der vorliegenden Erfindung der Zustand einer Batterie im Ball 320 abgefragt werden kann, ist sichergestellt, dass der Timer im Ball 320 bei Spielbeginn wieder beispielsweise auf 100 Millisekunden gestellt ist.

Gemäß einem Ausführungsbeispiel der vorliegenden Erfindung kann die Stromversorgung im Ball 320 auf beispielsweise 300 Stunden aktive Spielzeit ausgelegt sein. In einem sogenannten "Power-Down"-Betrieb kann die Lebensdauer der Batterie des Balls 320 beispielsweise auf drei Jahre ausgelegt sein. Durch die Verwendung einer Batterie kann auf eine aufwändige Ladetechnik eines Akkumulators komplett verzichtet werden.

An dieser Stelle soll erwähnt werden, dass die Energieversorgung des Balls 320 natürlich auch ohne Batterie mittels Akkumulatoren erfolgen könnte, welche beispielsweise durch natürliche Vorgänge, wie Lichteinstrahlung oder Bewegung aufgeladen werden können. Dies würde jedoch, wie oben angedeutet, relativ aufwändige Ladetechniken erfordern.

Ein Vorteil des erfindungsgemäßen Konzepts zur Positionsbestimmung besteht darin, dass eine Positionsbestimmung sehr robust gegenüber gewollter oder ungewollter Beeinflussung erfolgen kann. Das in Fig. 10 dargestellte System zur Positionsbestimmung eines beweglichen Objekts gemäß einem Ausführungsbeispiel der vorliegenden Erfindung könnte beispielsweise gestört werden, indem eine Funkverbindung zwischen Ball 320 und dem Zentralrechner 1000 gestört wird. Da gemäß einem Ausführungsbeispiel der vorliegenden Erfindung eine Empfangsantenne in der Steuereinheit 1000 der Spulen integriert ist und sich somit dicht hinter dem Tor befinden kann, ist eine Störung des Systems sehr aufwändig. Die Antenne kann zudem beispielsweise als Richtantenne zum Spielfeld ausgerichtet sein. Zudem ist eine Datenübertragung zwischen dem Ball 320 und der zentralen Steuereinheit 1000 gemäß einem Ausführungsbeispiel der vorliegenden Erfindung nur dann aktiv, wenn sich der Ball sehr dicht am Tor, d.h. in dem Ortsbestimmungsbereich befindet. Eine Empfangsleistung der Funkverbindung ist durch die relativ kurze Distanz zwischen Ball 320 und Steuereinheit 1000 sehr hoch. Dadurch müsste ein potentieller Angreifer eine sehr aufwändige und damit mit hoher Wahrscheinlichkeit nicht unauffällige Anlage verwenden.

Auch die von den Spulen 200a-e erzeugten Magnetfelder könnten gestört werden. Allerdings breiten sich künstliche Magnetfelder nicht sehr weist im Raum aus, da deren Feldstärke im Quadrat zur Entfernung von der Spule abnimmt. Demzufolge müsste ein Angreifer relativ große Spulen montieren, um ein Störfeld erzeugen zu können.

Durch in der Auswerteeinrichtung integrierten Plausibilitätsbetrachtungen kann das System eine Störung erkennen und beispielsweise eine Warnung generieren, falls es gelingen würde, per Funk oder per Magnetfeld das System zu stören.

Gemäß einem Ausführungsbeispiel der vorliegenden Erfindung werden am Tor Magnetfeldsensoren fest installiert, um die von den Spulen 200a-e erzeugten Magnetfelder überwachen zu können. Mit Hilfe dieser Sensoren können, die Magnetfelder geregelt werden, so dass beispielsweise Umwelteinflüsse (Temperatur kann den Spulenwiderstand beeinflussen) oder technische Einflüsse (z.B. plötzliches Einschalten einer Rasenheizung) korrigiert werden können.

Da bei dem erfindungsgemäßen Konzept zur Positionsbestimmung eines beweglichen Objekts keine Funkortung verwendet wird, werden andere Funksysteme, die im gleichen Frequenzbereich arbeiten, nicht gestört. Die direktionale Funkverbindung zwischen dem Ball 320 und dem Zentralrechner 1000 kann beispielsweise im 2.4-GHz Bereich angeordnet sein und ist aufgrund der geringen zu übertragenden Datenraten sehr schmalbandig. Daher stellt sie keine Belastung für vorhandene WLAN-Systeme (WLAN = Wireless Local Area Network) dar.

Da die von den Spulen 200a-e erzeugten und verwendeten magnetischen Felder in der Größenordnung des Erdmagnetfelds liegen, kann davon ausgegangen werden, dass diese keine biologischen Wirkungen haben. Auch das Umschalten der Magnetfelder hat aufgrund der Größen der Spulen und damit der einhergehenden großen Flächenverteilung des magnetischen Feldes keine nennenswerten Effekte. Beispielsweise ist eine punktuelle Belastung durch ein Mobiltelefon im Vergleich dazu um viele Größenordnungen höher.

Bei Systemen, welche auf Funkortung basieren, ist es mit vertretbarem Aufwand zumeist nicht möglich, Signal-Reflexionen vom Original-Signal unterscheiden zu können, wenn die Reflexion sehr dicht am Sender erfolgt. Diese Probleme treten bei der erfindungsgemäßen Vorgehensweise nicht auf. Des Weiteren besteht kein Problem bezüglich einer Feldabdeckung wie bei Funkortungs- oder optischen Systemen. Magnetfelder können Personen und Torpfosten ungedämpft durchdringen. Mittels Funksignalen kann hingegen der Ball nicht mehr geortet werden, wenn beispielsweise mehrere Personen auf dem Ball liegen.

Ein weiterer Vorteil von Ausführungsbeispielen der vorliegenden Erfindung besteht darin, dass das bewegliche Objekt bzw. der Ball einen geringen Stromverbrauch aufweisen kann, da er kein kontinuierliches Ortungssignal, wie es beispielsweise bei Radarsystemen oder Funkortungssystemen notwendig ist, senden muss.

Wird ein erfindungsgemäßes System beispielsweise zur Torerkennung beim Fußball benutzt, so sind keine umfangreichen Einbauten in einem Fußballstadion notwenig. Alle erforderlichen Einbauten befinden sich lediglich an den beiden jeweiligen Toren. Zudem ist kein Einmessen bzw. Kalibrieren von Antennen oder Kameras notwenig. Es gibt zudem keine unnötige Systembelastung durch nicht am Spiel beteiligte Bälle, da diese ausgeschaltet werden können bzw. sich nicht in Reichweite der im Torraum erzeugten Magnetfelder befinden.

Wie im Vorhergehenden bereits beschrieben, ist bei dem erfindungsgemäßen Konzept kein Eingriff in den Spielbetrieb notwendig, da eine Ballaktivierung automatisch vollzogen wird.

Nicht zuletzt kann eine Installation eines erfindungsgemäßen Systems zur Positionsbestimmung eines beweglichen Objekts mit erheblich geringeren Kosten im Vergleich zu funkbasierten oder optischen Systemen erfolgen.

Weitere Anwendungsmöglichkeiten des erfindungsgemäßen Konzepts sind natürlich auch bei anderen Sportarten zu sehen, in denen beispielsweise kritische Torentscheidungen zu fällen sind. Denkbare Anwendungen sind zudem beispielsweise auch in der Logistik zu finden, wo oftmals eine Kenntnis von Positionen von Produkten bzw. Gütern vorteilhaft ist.

Zusammenfassend schaffen Ausführungsbeispiele der vorliegende Erfindung also ein Verfahren zur Ortsbestimmung eines Balls durch aufeinander folgende Messungen der Feldstärken mehrerer Spulen, ein Verfahren zur Ortsbestimmung eines Balls durch aufeinander folgende Messungen der Feldrichtungen mehrerer Spulen, ein Verfahren zur Erhöhung der Genauigkeit durch Kombination von Feldstärkemessungen mit Feldrichtungsmessungen und ein Verfahren zur Erhöhung der Genauigkeit durch Ermittlung der Rotationsgeschwindigkeit des Balls um die weitere Flugbahn besser berechnen zu können. Weitere Ausführungsbeispiele der vorliegende Erfindung umfassen ein Verfahren zur Messung von Feldverzerrungen mittels eines Torscanners, ein Verfahren zur Ortsbestimmung mittels voraus berechneter Feldstärke und Feldrichtungen in der Ebene der Torlinie. Bezüglich des Balls schaffen Ausführungsbeispiele der vorliegende Erfindung ein Verfahren zum aktivieren des Balls mittels Funkwellen, ein Verfahren zum aktivieren des Balls mittels eines magnetischen Feldes und ein Verfahren zur Energieeinsparung mit Hilfe der Aktivierungstechnik und der dynamischen Abtastung der aktivierenden Bedingungen. Außerdem umfassen Ausführungsbeispiele der vorliegende Erfindung ein Verfahren zur Erkennung von gewollter oder ungewollter Beeinflussung des Systems.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Mikrocontroller zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder Mikrocontroller abläuft. In anderen Worten ausgedrückt kann die Erfindung somit als ein Computerprogramm mit einem Programmcode zur Durchführung des Verfahrens realisiert werden, wenn das Computerprogramm auf einem Computer und/oder Mikrocontroller abläuft.

**Patentansprüche**

1. Vorrichtung (100) zum Ansteuern von wenigstens zwei Spulen (200a,b), die an verschiedenen Positionen bezüglich eines Ortsbestimmungsbereichs angeordnet sind, für eine Positionsangabe eines Objekts (320), das sich in Reichweite von durch die Spulen (200a,b) erzeugten Magnetfeldern befindet, mit folgenden Merkmalen:

   einer Einrichtung (110) zum Erzeugen von Spulenaktivierungssignalen für die wenigstens zwei Spulen (200a,b) mit einem Multiplexverfahren, wobei die Einrichtung (110) zum Erzeugen von Spulenaktivierungssignalen ausgebildet ist, um die Spulenaktivierungssignale für die wenigstens zwei Spulen (200a,b) mit unterschiedlicher Polarität zu erzeugen.

2. Vorrichtung gemäß Anspruch 1, wobei die Einrichtung (110) zum Erzeugen von Spulenaktivierungssignalen ausgebildet ist, um mit einem Zeitmultiplexverfahren sequentiell Spulenaktivierungssignalen für die wenigstens zwei Spulen (200a,b) zu erzeugen, so dass in einer ersten Zeitdauer nur eine der wenigstens zwei Spulen (200a,b) aktiviert ist und in einer zweiten Zeitdauer nur eine andere der wenigstens zwei Spulen (200a,b) aktiviert ist.

3. Vorrichtung gemäß Anspruch 2, wobei die Einrichtung (110) zum Erzeugen von Spulenaktivierungssignalen ausgebildet ist, um die Spulenaktivierungssignale so zeitlich getrennt zu erzeugen, dass ein durch eine angesteuerte Spule (200) erzeugtes Magnetfeld wenigstens für eine vorbestimmte Zeitdauer konstant ist.

4. Vorrichtung gemäß Anspruch 3, wobei die Einrichtung (110) zum Erzeugen von Spulenaktivierungssignalen ausgebildet ist, um die Spulenaktivierungssignale so zeitlich getrennt zu erzeugen, dass ein durch eine angesteuerte Spule (200) erzeugtes Magnetfeld wenigstens für die Zeitdauer $T \geq 10$ Mikrosekunden konstant ist.

5. Vorrichtung gemäß Anspruch 2, wobei die Vorrichtung ferner folgendes Merkmal aufweist:

   eine Einrichtung zum Übermitteln von Informationen darüber, welche Spule der wenigstens zwei Spulen (200a,b) gerade von der Einrichtung (110) zum Erzeugen von Spulenaktivierungssignalen angesteuert wird.

6. Vorrichtung gemäß Anspruch 2, wobei die Vorrichtung ferner folgendes Merkmal aufweist:

   eine Einrichtung zum Übermitteln einer Information über einen Start des sequentiellen Erzeugens der Spulenaktivierungssignale.

7. Vorrichtung gemäß Anspruch 1, wobei die Einrichtung (110) zum Erzeugen von Spulenaktivierungssignalen ausgebildet ist, um mit einem Frequenzmultiplexverfahren magnetische Wechselfelder mit den wenigstens zwei Spulen (200a,b) zu erzeugen, so dass ein magnetisches Wechselfeld einer der wenigstens zwei Spulen (200a,b) eine andere Frequenz aufweist als ein magnetisches Wechselfeld einer anderen der wenigstens zwei Spulen (200a,b).

8. Vorrichtung gemäß einem der vorhergehenden Ansprüche, wobei die Einrichtung (110) zum Erzeugen von Spulenaktivierungssignalen ausgebildet ist, um die Spulenaktivierungssignale für die wenigstens zwei Spulen (200a,b) mit unterschiedlichen Intensitäten zu erzeugen.

9. Vorrichtung gemäß Anspruch 1, wobei die Vorrichtung ferner folgendes Merkmal aufweist:

   eine Einrichtung zum Erzeugen eines dauerhaften Aktivierungssignals für eine zu den wenigstens zwei Spulen (200a,b) zusätzliche Spule.

10. Bewegliches Objekt (320) für eine Lokalisierung in einem Ortsbestimmungsbereich, in dem wenigstens zwei Spulen (200a,b) an verschiedenen Positionen bezüglich des Ortsbestimmungsbereichs angeordnet sind und gemäß einer Steuersequenz durch mit einem Multiplexverfahren erzeugte Spulenaktivierungssignale für die wenigstens zwei

**13**

Spulen (200 a, b), wobei die Spulenaktivierungssignale für die wenigstens zwei Spulen mit unterschiedlicher Polarität erzeugt werden, angesteuert werden, wobei das bewegliche Objekt die folgenden Merkmale aufweist:

einen Magnetfeldsensor (800) zum Erfassen eines Magnetfeldes, in dem sich das bewegliche Objekt (320) befindet;
einen Sender (820) zum Senden von wenigstens einem Messwert; und
eine Steuerung (810) zum Steuern des Magnetfeldsensors (800) oder des Senders (820), so dass gemäß der Steuersequenz Magnetfeldmesswerte gesendet werden können.

11. Bewegliches Objekt gemäß Anspruch 10, bei dem der Magnetfeldsensor (800) ein dreidimensionaler Magnetfeldsensor ist.

12. Bewegliches Objekt gemäß Anspruch 10, bei dem der Sender (820) zum Senden von wenigstens einem Messwert einen Funksender aufweist.

13. Bewegliches Objekt gemäß Anspruch 10, wobei das bewegliche Objekt (320) eine Energieversorgungseinrichtung aufweist, um das bewegliche Objekt (320) mit Energie zu versorgen.

14. Bewegliches Objekt gemäß Anspruch 10, wobei die Steuerung (810) ausgebildet ist, um in vorbestimmten Zeitabständen den Magnetfeldsensor (800) und/oder den Sender (820) anzusteuern.

15. Bewegliches Objekt gemäß Anspruch 10, das ferner folgende Merkmale aufweist:

einen Empfänger zum Empfangen eines Aktivierungssignals für das bewegliche Objekt (320) ;
einen Prozessor zum Aktivieren der Steuerung (810) zum Steuern des Magnetfeldsensors (800) oder des Senders (820) auf Basis des Aktivierungssignals.

16. Vorrichtung gemäß Anspruch 1, mit einer Einrichtung (900) zum Ermitteln von Informationen über die Position des Objektes (320) mit einem Empfänger (910) zum Empfangen von einer Sequenz von Messwerten von dem beweglichen Objekt (320), wobei Messwerte der Sequenz von Messwerten einer Spule der wenigstens zwei Spulen (200a, b) zuordenbar sind; und
einer Auswertungseinrichtung (920) zum Auswerten der Sequenz von Messwerten und der Verwendung von Informationen über die Spulen (200a,b),von denen die einzelnen Messwerte stammen, um die Information über die Position des beweglichen Objekts (320) zu erhalten.

17. Vorrichtung gemäß Anspruch 16, wobei der Empfänger (910) ein Funkempfänger ist.

18. Vorrichtung gemäß Anspruch 16, wobei die Auswertungseinrichtung (920) ausgebildet ist, um die Information über die Position des beweglichen Objektes (320) durch Lösen eines Gleichungssystems zu erhalten, in das die Sequenz von Messwerten bezüglich der Magnetfelder der einzelnen Spulen (200a,b) eingesetzt wird.

19. Vorrichtung gemäß Anspruch 16, wobei die Auswertungseinrichtung (920) ausgebildet ist, um die Information über die Position des beweglichen Objektes (320) durch Vergleichen der Messwerte der Sequenz von Messwerten mit vorbestimmten Werten zu erhalten, die Positionen des beweglichen Objekts (320) in dem Ortsbestimmungsbereich entsprechen.

20. Vorrichtung gemäß Anspruch 16, wobei die Auswertungseinrichtung (920) ausgebildet ist, um eine Genauigkeit der Information über die Position des beweglichen Objektes (320) zu erhöhen, indem Feldstärkemesswerte des magnetischen Feldes mit zugehörigen Feldrichtungsmesswerten kombiniert werden.

21. Vorrichtung gemäß Anspruch 16, wobei die Auswertungseinrichtung (920) ausgebildet ist, um eine Rotationsgeschwindigkeit des beweglichen Objektes (320) durch Auswertung von sequentiellen Messwerten des Erdmagnetfeldes zu ermitteln.

22. Vorrichtung gemäß Anspruch 16 oder 21, wobei die Auswertungseinrichtung (920) ausgebildet ist, um die Information über die Position des beweglichen Objekts (320) auf der Basis vorübergehender Informationen über die vorhergehende Positionen des beweglichen Objektes (320) und der Rotationsgeschwindigkeit zu korrigieren.

**23.** Vorrichtung gemäß Anspruch 16, wobei die Vorrichtung (900) ferner folgende Merkmale aufweist:

einen Sender zum Senden eines Aktivierungssignals für ein bewegliches Objekt (320).

**24.** Vorrichtung gemäß Anspruch 16, wobei die Auswertungseinrichtung (920) zum Auswerten der Sequenz von Messwerten ausgebildet ist, um die Sequenz von Messwerten zu derart zu filtern, dass eine gefilterte Sequenz Messwerte von Magnetfeldern lediglich einer der wenigstens zwei Spulen (200a,b) aufweist.

**25.** Tor mit zwei Seitenpfosten (300a,b) und einer Querlatte (300c), mit folgenden Merkmalen:

einer ersten Spule (200a) und einer zweiten Spule (200b), wobei die Spulen jeweils an einem unterschiedlichen der zwei Pfosten (300a,b) oder der Querlatte angebracht (300c) sind und von der Vorrichtung gemäß Anspruch 1 angesteuert werden.

**26.** Tor gemäß Anspruch 25, wobei das Tor (300) ein Netz aufweist, das an wenigstens zwei Netzaufhängungen (300d, e) aufgehängt ist und wobei eine erste Spule (200a) an einem ersten Seitenpfosten (300a), eine zweite Spule (200b) an einem zweiten Seitenpfosten (300b), eine dritte Spule (200c) an der Querlatte (300c), eine vierte Spule (200d) an einer ersten Netzaufhängung (300d) und eine fünfte Spule (200e) an einer zweiten Netzaufhängung (300e) angebracht ist.

**27.** Tor mit zwei Seitenpfosten (300a,b) und einer Querlatte (300c), mit folgenden Merkmalen:

einer ersten Spule (200a), wobei die erste Spule (200a) um einen durch die Seitenpfosten (300a,b) und die Querlatte (300c) begrenzten Bereich gewickelt ist, wobei das Tor (300) ferner zwei Netzaufhängungspfosten und eine Netzaufhängungsquerlatte aufweist und wobei eine zweite Spule (200b) um einen durch die Netzaufhängungspfosten und die Netzaufhängungsquerlatte begrenzten Bereich gewickelt ist, wobei ferner die beiden Spulen von der Vorrichtung gemäß Anspruch 1 angesteuert werden.

**28.** Positionsbestimmungsverfahren mit folgenden Schritten:

Ansteuern von wenigstens zwei Spulen (200a,b), die an verschiedenen Positionen bezüglich eines Ortsbestimmungsbereichs angeordnet sind, für eine Positionsangabe eines Objektes (320) , das sich in Reichweite von durch die Spulen (200a,b) erzeugten Magnetfeldern befindet durch Erzeugen von Spulenaktivierungssignalen für die wenigstens zwei Spulen (200a,b) mit einem Multiplexverfahren, wobei die Spulenaktivierungssignale für die wenigstens zwei Spulen mit unterschiedlicher Polarität erzeugt werden;
Erfassen eines Magnetfeldes durch ein bewegliches Objekt (320), in dem sich das bewegliche Objekt (320) befindet;
Senden von wenigstens einem Messwert durch das bewegliche Objekt (320); und
Steuern eines Magnetfeldsensors (800) oder eines Senders (820), so dass gemäß der Steuersequenz Magnetfeldmesswerte gesendet werden können, durch das bewegliche Objekt (320) ;
Empfangen von einer Sequenz von Messwerten von dem beweglichen Objekt (320), wobei jeder Messwert der Sequenz von Messwerten einer Spule der wenigstens zwei Spulen (200a,b) zugeordnet ist; und
Auswerten der Sequenz von Messwerten unter Verwendung von Informationen über die Spulen, von denen die einzelnen Messwerte stammen, um die Information über die Position des beweglichen Objekts (320) zu erhalten.

**29.** Computer-Programm mit einem Programmcode zur Durchführung des Verfahrens gemäß Anspruch 28, wenn das Computer-Programm auf einem Computer oder Mikrocontroller abläuft.

**Claims**

**1.** Device (100) for during at least two coils (200a, b) which are disposed in different positions relative to a position-determination area for indicating a position of an object (320) disposed within range of magnetic fields generated by the coils (200a, b), comprising the following features:

a unit (110) for generating coil activation signals for the at least two coils (200a, b) by means of a multiplexing process, and the unit (110) for generating coil activation signals is adapted to generate the coil activation signals for the at least two coils (200a, b) with different polarities.

2. Device as claimed in claim 1, wherein the unit (110) for generating coil activation signals is adapted to generate coil activation signals for the at least two coils (200a, b) sequentially by means of a time multiplexing process so that during a first period, only one of the at least two coils (200a, b) is activated and during a second period, only one other of the at least two coils (200a, b) is activated.

3. Device as claimed in claim 2, wherein the unit (110) for generating coil activation signals is adapted to generate the coil activation signals separately in time so that a magnetic field generated by an activated coil (200) is constant at least for a predefined period of time.

4. Device as claimed in claim 3, wherein the unit (110) for generating coil activation signals is adapted to generate the coil activation signals separately in time so that a magnetic field generated by an activated coil (200) is constant at least for the period of T >10 microseconds.

5. Device as claimed in claim 2, wherein the device further comprises the following feature:

   a unit for transmitting data about which coil of the at least two coils (200a, b) is currently activated by the unit (110) for generating coil activation signals.

6. Device as claimed in claim 2, wherein the device further comprises the following feature:

   a unit for transmitting information about a start of the sequential generation of coil activation signals.

7. Device as claimed in claim 1, wherein the unit (110) for generating coil activation signals is adapted to generate magnetic alternating fields with the at least two coils (200a, b) by means of a frequency multiplexing process so that a magnetic alternating field of one of the at least two coils (200a, b) has a different frequency from a magnetic alternating field of one other of the at least two coils (200a, b).

8. Device as claimed in one of the preceding claims, wherein the unit (110) for generating coil activation signals is adapted to generate the coil activation signals for the at least two coils (200a, b) with different intensities.

9. Device as claimed in claim 1, wherein the device further comprises the following feature:

   a unit for generating a permanent activation signal for a coil provided in addition to the at least two coils (200a, b).

10. Mobile object (320) for position determination in a position-fixing area in which at least two coils (200a, b) are disposed at different positions relative to the position-determination area, and coil activation signals generated for the at least two coils (200a, b) by means of a multiplexing process are activated on the basis of a control sequence, and the coil activation signals for the at least two coils are generated with different polarities, and the moving object comprises the following features:

    a magnetic field sensor (800) for detecting a magnetic field in which the moving object (320) is disposed;
    a transmitter (820) for transmitting at least one measurement value; and
    a controller (810) for controlling the magnetic field sensor (800) or transmitter (820) so that magnetic field measurement values can be transmitted on the basis of the control sequence.

11. Mobile object as claimed in claim 10, in which the magnetic field sensor (800) is a three-dimensional magnetic field sensor.

12. Mobile object as claimed in claim 10, in which the transmitter (820) has a radio transmitter for transmitting at least one measurement value.

13. Mobile object as claimed in claim 10, wherein the moving object (320) has an energy supply unit in order to supply the moving object (320) with energy.

14. Mobile object as claimed in claim 10, wherein the controller (810) is designed to activate the magnetic field sensor (800) and/or the transmitter (820) at predefined time intervals.

15. Mobile object as claimed in claim 10, which further comprises the following features:

    a receiver for receiving an activation signal for the Mobile object (320);
    a processor for activating the controller (810) in order to control the magnetic field sensor (800) or the transmitter (820) on the basis of the activation signal.

16. Device as claimed in claim 1, with a unit (900) for detecting information about the position of the object (320) with a receiver (910) for receiving a sequence of measurement values from the mobile object (320), wherein measurement values in the sequence of measurement values can be assigned to a coil of the at least two coils (200a, b); and an evaluation unit (920) for evaluating the sequence of measurement values and using information about the coils (200a, b) from which the individual measurement values originate as a means of obtaining information about the position of the mobile object (320).

17. Device as claimed in claim 16, wherein the receiver (910) is a radio receiver.

18. Device as claimed in claim 16, wherein the evaluation unit (920) is designed to obtain the information about the position of the mobile object (320) by solving an equation system in which the sequence of measurement values relating to the magnetic fields of the individual coils (200a, b) is inserted.

19. Device as claimed in claim 16, wherein the evaluation unit (920) is adapted to obtain the information about the position of the mobile object (320) by comparing the measurement values in the sequence of measurement values with predefined values corresponding to the position of the mobile object (320) in the position-determination area.

20. Device as claimed in claim 16, wherein the evaluation unit (920) is adapted to increase an accuracy of the information about the position of the mobile object (320) by combining field intensity measurement values of the magnetic field with associated field direction measurement values.

21. Device as claimed in claim 16, wherein the evaluation unit (920) is adapted to detect a rotation speed of the moving object (320) by evaluating sequential measurement values of the earth's magnetic field.

22. Device as claimed in claim 16 or 21, wherein the evaluation unit (920) is adapted to correct the information about the position of the mobile object (320) on the basis of temporary information about the preceding positions of the mobile object (320) and the rotation speed.

23. Device as claimed in claim 16, wherein the device (900) further comprises the following features:

    a transmitter for transmitting an activation signal for a moving object (320).

24. Device as claimed in claim 16, wherein the evaluation unit (920) for evaluating the sequence of measurement values is adapted to filter the sequence of measurement values so that a filtered sequence contains measurement values from magnetic fields of only one of the at least two coils (200a, b).

25. Goal with two side posts (300a, b) and a cross-bar (300c), with the following features:

    a first coil (200a) and a second coil (200b), and the coils are respectively mounted on a different one of the two posts (300a, b) or the cross-bar (300c) and are activated by the device as claimed in claim 1.

26. Goal as claimed in claim 25, wherein the goal (300) has a net which is suspended on at least two net hangers (300d, e), and a first coil (200a) is mounted on a first side post (300a), a second coil (200b) is mounted on a second side post (300b), a third coil (200c) is mounted on the cross-bar (300c), a fourth coil (200d) is mounted on a first net hanger (300d) and a fifth coil (200e) is mounted on a second net hanger (300e).

27. Goal with two side posts (300a, b) and a cross-bar (300c), with the following features:

    a first coil (200a), which first coil (200a) is wound around an area delimited by the side posts (300a, b) and the cross-bar (300c),

17

and the goal (300) also has two net hanger posts and a net hanger cross-bar and a second coil (200b) is wound around an area delimited by the net hanger posts and the net hanger cross-bar, wherein further the two coils are activated by the device as claimed in claim 1.

**28.** Position-determination method comprising the following steps:

driving at least two coils (200a, b) disposed in different positions relative to a position-determination area for determining the position of an object (320) disposed within range of magnetic fields generated by the coils (200a, b) by generating coil activation signals for the at least two coils (200a, b) by means of a multiplexing process, and the coil activation signals for the at least two coils are generated with different polarities; detecting a magnetic field in which a mobile object (320) is disposed by means of the mobile object (320); transmitting at least one measurement value by means of the mobile object (320);and controlling a magnetic field sensor (800) or a transmitter (820) so that magnetic field measurement values can be transmitted by means of the mobile object (320) on the basis of the control sequence; receiving a sequence of measurement values from the mobile object (320), and every measurement value in the sequence of measurement values is assigned to a coil of the at least two coils (200a, b); and evaluating the sequence of measurement values using information about the coils from which the individual measurement values originate in order to obtain the information about the position of the mobile object (320).

**29.** Computer programme with a programme code for implementing the method as claimed in claim 28 when the computer programme is running on a computer or micro-controller.


**Revendications**

**1.** Dispositif (100) pour commander au moins deux bobines (200a, b) qui sont disposées au niveau de positions différentes par rapport à une zone de localisation, pour une indication de position d'un objet (320) qui se trouve à portée de champs magnétiques produits par les bobines (200a, b), avec les caractéristiques suivantes :

un appareil (110) pour produire des signaux d'activation de bobines pour les deux bobines (200a, b), ou plus, à l'aide d'un procédé de multiplexage, étant précisé que l'appareil (110) pour produire des signaux d'activation de bobines est conçu pour produire les signaux d'activation de bobines pour les deux bobines (200a, b), ou plus, avec des polarités différentes.

**2.** Dispositif selon la revendication 1, étant précisé que l'appareil (110) pour produire des signaux d'activation de bobines est conçu pour produire de manière séquentielle, à l'aide d'un procédé de multiplexage dans le temps, des signaux d'activation de signaux pour les deux bobines (200a, b), ou plus, de sorte que lors d'une première durée, une seule des deux bobines (200a, b) soit activée et que lors d'une seconde durée, seule l'autre bobine (200a, b) soit activée.

**3.** Dispositif selon la revendication 2, étant précisé que l'appareil (110) pour produire des signaux d'activation de bobines est conçu pour produire les signaux d'activation de bobines séparément dans le temps de telle sorte qu'un champ magnétique produit par une bobine (200) commandée soit constant au moins pour une durée prédéfinie.

**4.** Dispositif selon la revendication 3, étant précisé que l'appareil (110) pour produire des signaux d'activation de bobines est conçu pour produire les signaux d'activation de bobines séparément dans le temps de telle sorte qu'un champ magnétique produit par une bobine (200) commandée soit constant au moins pour la durée $T \geq 10$ microsecondes.

**5.** Dispositif selon la revendication 2, étant précisé qu'il présente par ailleurs la caractéristique suivante :

un appareil pour transmettre des informations indiquant quelle bobine, parmi les deux bobines (200a, b) ou plus, est commandée précisément par l'appareil (110) pour produire des signaux d'activation de bobines.

**6.** Dispositif selon la revendication 2, étant précisé qu'il présente par ailleurs la caractéristique suivante :

un appareil pour transmettre une information sur un démarrage de la production séquentielle des signaux d'activation de bobines.

**7.** Dispositif selon la revendication 1, étant précisé que l'appareil (110) pour produire des signaux d'activation de bobines est conçu pour produire à l'aide d'un procédé de multiplexage en fréquence des champs magnétiques alternatifs avec les deux bobines (200a, b), ou plus, de sorte qu'un champ magnétique alternatif de l'une desdites bobines (200a, b) présente une fréquence différente par rapport à un champ magnétique alternatif d'une autre bobine (200a, b).

**8.** Dispositif selon l'une des revendications précédentes, étant précisé que l'appareil (110) pour produire des signaux d'activation de bobines est conçu pour produire les signaux d'activation de bobines pour les deux bobines (200a, b), ou plus, avec des intensités différentes.

**9.** Dispositif selon la revendication 1, étant précisé qu'il présente par ailleurs la caractéristique suivante :

un appareil pour produire un signal d'activation permanent pour une bobine prévue en plus des deux bobines (200a, b), ou plus.

**10.** Objet mobile (320) pour une localisation dans une zone de localisation dans laquelle au moins deux bobines (200a, b) sont disposées au niveau de positions différentes par rapport à ladite zone de localisation et sont commandées selon une séquence de commande par des signaux d'activation de bobines produits pour les deux bobines (200a, b), ou plus, à l'aide d'un procédé de multiplexage, les signaux d'activation de bobine pour les deux bobines, ou plus, étant produits avec des polarités différentes, étant précisé que l'objet mobile présente les caractéristiques suivantes :

un capteur de champ magnétique (800) pour détecter un champ magnétique dans lequel l'objet mobile (320) se trouve ;
un émetteur (820) pour émettre au moins une valeur de mesure ; et
une commande (810) pour commander le capteur de champ magnétique (800) ou l'émetteur (820) pour que des valeurs de mesure de champ magnétique puissent être émises selon la séquence de commande.

**11.** Objet mobile selon la revendication 10, étant précisé que le capteur de champ magnétique (800) est un capteur de champ magnétique à trois dimensions.

**12.** Objet mobile selon la revendication 10, étant précisé que l'émetteur (820) pour émettre au moins une valeur de mesure comporte un émetteur radio.

**13.** Objet mobile selon la revendication 10, étant précisé que l'objet mobile (320) comporte un appareil d'alimentation en énergie pour alimenter ledit objet mobile (320) en énergie.

**14.** Objet mobile selon la revendication 10, étant précisé que la commande (810) est conçue pour commander à intervalles prédéfinis le capteur de champ magnétique (800) et/ou l'émetteur (820).

**15.** Objet mobile selon la revendication 10, qui présente par ailleurs les caractéristiques suivantes :

un récepteur pour recevoir un signal d'activation pour l'objet mobile (320) ;
un processeur pour activer la commande (810) pour commander le capteur de champ magnétique (800) ou l'émetteur (820) sur la base du signal d'activation.

**16.** Dispositif selon la revendication 1, avec un appareil (900) pour déterminer des informations sur la position de l'objet (320) avec un récepteur (910) pour recevoir une séquence de valeurs de mesure de l'objet mobile (320), étant précisé que des valeurs de mesure de la séquence de valeurs de mesure sont aptes à être affectées à l'une desdites bobines (200a, b) ; et
un dispositif d'analyse (920) pour analyser la séquence de valeurs de mesure et l'utilisation d'informations sur les bobines (200a, b) d'où proviennent les valeurs de mesure individuelles, afin d'obtenir l'information sur la position de l'objet mobile (320).

**17.** Dispositif selon la revendication 16, étant précisé que le récepteur (910) est un récepteur radio.

**18.** Dispositif selon la revendication 16, étant précisé que le dispositif d'analyse (920) est conçu pour obtenir l'information sur la position de l'objet mobile (320) grâce à la résolution d'un système d'équations dans lequel la séquence de valeurs de mesure relatives aux champs magnétiques des bobines individuelles (200a, b) est intégrée.

**19.** Dispositif selon la revendication 16, étant précisé que le dispositif d'analyse (920) est conçu pour obtenir l'information sur la position de l'objet mobile (320) grâce à la comparaison des valeurs de mesure de la séquence de valeurs de mesure avec des valeurs prédéfinies qui correspondent à des positions de l'objet mobile (320) dans la zone de localisation.

**20.** Dispositif selon la revendication 16, étant précisé que le dispositif d'analyse (920) est conçu pour accroître la précision de l'information sur la position de l'objet mobile (320) en combinant des valeurs d'intensité du champ magnétique avec des valeurs de mesure de direction de champ correspondantes.

**21.** Dispositif selon la revendication 16, étant précisé que le dispositif d'analyse (920) est conçu pour déterminer une vitesse de rotation de l'objet mobile (320) en analysant des valeurs de mesure séquentielles du champ magnétique terrestre.

**22.** Dispositif selon la revendication 18 ou 21, étant précisé que le dispositif d'analyse (920) est conçu pour corriger l'information sur la position de l'objet mobile (320) sur la base d'informations provisoires sur les positions précédentes de l'objet mobile (320) et de la vitesse de rotation.

**23.** Dispositif selon la revendication 16, étant précisé que le dispositif (900) présente par ailleurs les caractéristiques suivantes :

un émetteur pour émettre un signal d'activation pour un objet mobile (320).

**24.** Dispositif selon la revendication 16, étant précisé que le dispositif d'analyse (920) est conçu pour analyser la séquence de valeurs de mesure afin de filtrer ladite séquence de valeurs de mesure de telle sorte qu'une séquence filtrée présente des valeurs de mesure de champs magnétiques de l'une seulement desdites bobines (200a, b).

**25.** But avec deux poteaux latéraux (300a, b) et une barre latérale (300c), avec les caractéristiques suivantes :

une première bobine (200a) et une seconde bobine (200b), les bobines étant installées chacune sur un poteau (300a, b) différent ou sur la barre transversale (300c) et étant commandées par le dispositif de la revendication 1.

**26.** But selon la revendication 25, étant précisé que le but (300) comporte un filet qui est accroché à au moins deux suspensions de filet (300d, e) et qu'une première bobine (200a) est installée sur un premier poteau (300a), une deuxième bobine (200b) sur un second poteau (300b), une troisième bobine (200c) sur la barre transversale (300c), une quatrième bobine (200d) sur une première suspension de filet (300d) et une cinquième bobine (200e) sur une seconde suspension de filet (300e).

**27.** But avec deux poteaux latéraux (300a, b) et une barre transversale (300c), avec les caractéristiques suivantes :

une première bobine (200a), la première bobine (200a) étant enroulée sur une zone délimitée par les poteaux (300a, b) et la barre transversale (300c),
étant précisé que le but (300) comporte par ailleurs deux poteaux de suspension de filet et une barre transversale de suspension de filet, et qu'une seconde bobine (200b) est enroulée sur une zone délimitée par les poteaux de suspension de filet et la barre transversale de suspension de filet, et étant précisé par ailleurs que les deux bobines sont commandées par le dispositif selon la revendication 1.

**28.** Procédé de définition de position avec les étapes suivantes :

commande d'au moins deux bobines (200a, b) qui sont disposées au niveau de positions différentes par rapport à une zone de localisation, pour une indication de position d'un objet (320) qui se trouve à portée de champs magnétiques produits par les bobines (200a, b), grâce à la production de signaux d'activation de bobines pour les deux bobines (200a, b), ou plus, à l'aide d'un procédé de multiplexage, étant précisé que les signaux d'activation de bobines sont produits avec des polarités différentes pour les deux bobines ou plus ;
détection, grâce à un objet mobile (320), d'un champ magnétique dans lequel se trouve l'objet mobile (320) ;
émission d'au moins une valeur de mesure grâce à l'objet mobile (320) ; et
commande d'un capteur de champ magnétique (800) ou d'un émetteur (820) de sorte que des valeurs de mesure de champ magnétique puissent être émises selon la séquence de commande, par l'objet mobile (320) ; réception d'une séquence de valeurs de mesure de l'objet mobile (320), étant précisé que chaque valeur de mesure de la séquence de valeurs de mesure est apte à être affectée à l'une desdites bobines (200a, b) ; et analyse de la séquence de valeurs de mesure à l'aide d'informations sur les bobines d'où proviennent les valeurs de mesure individuelles, afin d'obtenir l'information sur la position de l'objet mobile (320).

29. Programme informatique avec un code de programme pour la mise en oeuvre du procédé selon la revendication 28 quand le programme informatique est exécuté sur un ordinateur ou un microcontrôleur.

## FIG 1

## FIG 2a

## FIG 2b

## FIG 3

# FIG 4

Ermitteln des Erdmagnetfeldes
am Objektort — S1

Erzeugen eines statischen
magn. Feldes mit 1. Ordnung — S2

Ermitteln des Übergangsfeldes
aus Erdmagnetfeld und des
1. stat. magn. Feldes — S3

Erzeugen eines statischen
magn. Feldes mit 2. Ordnung — S4

Ermitteln des Übergangsfeldes
aus Erdmagnetfeld und des
2. stat. magn. Feldes — S5

Bestimmen der Position
des Objektes — S6

EP 1 852 155 B1

**FIG 5**

**FIG 6**

25

# FIG 7

# FIG 8

## FIG 9

900     910     920

## FIG 10

300e; 200e
300c; 200c
300a;
200a
300d;
200d
300b; 200b
320
500
1010
1000
(100, 900)
300

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6686881 B1
- US 2003163037 A1
- DE 2732543 A1